(19)

**Europäisches Patentamt**
**European Patent Office**
**Office européen des brevets**

(11) **EP 4 755 964 A1**

(12) **EUROPEAN PATENT APPLICATION**
published in accordance with Art. 153(4) EPC

(43) Date of publication:
**10.06.2026  Bulletin 2026/24**

(21) Application number: **24848743.1**

(22) Date of filing: **25.06.2024**

(51) International Patent Classification (IPC):
**C08J 11/16** (2006.01)     **C08J 3/12** (2006.01)

(52) Cooperative Patent Classification (CPC):
**C08J 3/12; C08J 11/16;** Y02W 30/62

(86) International application number:
**PCT/JP2024/023029**

(87) International publication number:
**WO 2025/028083 (06.02.2025 Gazette 2025/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.07.2023  JP 2023124764**
             **31.07.2023  JP 2023124937**

(71) Applicant: **Nippon Shokubai Co., Ltd.**
**Osaka-shi, Osaka 541-0043 (JP)**

(72) Inventors:
• **KOBAYASHI, Nobuhiro**
  **Himeji-shi, Hyogo 671-1282 (JP)**

• **NOGI, Kozo**
  **Himeji-shi, Hyogo 671-1282 (JP)**
• **FUJINO, Shinichi**
  **Himeji-shi, Hyogo 671-1282 (JP)**
• **TORII, Kazushi**
  **Himeji-shi, Hyogo 671-1282 (JP)**
• **MATSUI, Daisuke**
  **Himeji-shi, Hyogo 671-1282 (JP)**
• **ENOKIDA, Yusuke**
  **Himeji-shi, Hyogo 671-1282 (JP)**
• **ISHIZAKI, Kunihiko**
  **Himeji-shi, Hyogo 671-1282 (JP)**

(74) Representative: **Schön, Christoph**
**Dr. Schön, Neymeyr & Partner mbB**
**Bavariaring 26**
**80336 München (DE)**

(54)  **MANUFACTURING METHOD FOR SOLUBILIZED POLYMER**

(57)  An object of the present invention is to provide a novel method for producing a solubilized polymer obtained by decomposing a water-absorbent resin, which can shorten the decomposition time of the water-absorbent resin. A method for producing a solubilized polymer, including preparing a water-absorbent resin (A), which is a water-absorbent resin to be decomposed, and contacting the water-absorbent resin (A) with a decomposing agent, in which: (i) the contacting is performed in the presence of a water-absorbent resin (B), which is a water-absorbent resin having higher decomposability than the water-absorbent resin (A); or (ii) the contacting is performed in the presence of a decomposed product separately prepared by contacting a water-absorbent resin (B) with a decomposing agent, the water-absorbent resin (B) being a water-absorbent resin having higher decomposability than the water-absorbent resin (A).

FIG. 1

**Description**

Technical Field

The present invention relates to a method for producing a solubilized polymer.

Background Art

Water-absorbent polymers used in various fields, including sanitary articles such as paper diapers, have a structure in which a water-soluble polymer is three-dimensionally crosslinked, and therefore, even if the water-absorbent polymer absorbs water and swells, the water-absorbent polymer does not dissolve. Therefore, for example, paper diapers and the like using these water-absorbent polymers are currently disposed of after use by incineration or landfilling as waste, which is not preferable from the viewpoint of environmental conservation.

To solve this problem, Patent Document 1 discloses a disposal method in which a water-absorbent polymer is decomposed with hydrogen peroxide; however, a problem is that a large amount of hydrogen peroxide and a long treatment time are required.

To solve the problem, Patent Document 2 proposes a decomposition method characterized by contacting a decomposing agent containing a periodate as an oxidizing agent with a water-absorbent polymer to decompose the water-absorbent polymer. Example 1 of the same document shows an example in which sodium periodate was dissolved in distilled water, and an acrylate crosslinked polymer (water-absorbent polymer/granular: used in "Merries" available from Kao Corporation) was added to and mixed with the aqueous solution to decompose the water-absorbent polymer.

Citation List

Patent Document

Patent Document 1: JP 4-317784 A

Patent Document 2: JP 2001-316519 A

Summary of Invention

Technical Problem

The present inventors have found that the decomposition time of the water-absorbent resin cannot be shortened only by using a decomposing agent such as an oxidizing agent as shown in the conventional examples.

Accordingly, an object of the present invention is to provide a novel method for producing a solubilized polymer obtained by decomposing a water-absorbent resin, which can shorten the decomposition time of the water-absorbent resin.

Solution to Problem

One aspect for achieving the object is a method for producing a solubilized polymer, including preparing a water-absorbent resin (A), which is a water-absorbent resin to be decomposed; and contacting the water-absorbent resin (A) with a decomposing agent, in which: (i) the contacting is performed in the presence of a water-absorbent resin (B), which is a water-absorbent resin having higher decomposability than the water-absorbent resin (A); or (ii) the contacting is performed in the presence of a decomposed product separately prepared by contacting a water-absorbent resin (B) with a decomposing agent, the water-absorbent resin (B) being a water-absorbent resin having higher decomposability than the water-absorbent resin (A).

Advantageous Effects of Invention

According to the present invention, it is possible to provide a novel method for producing a solubilized polymer obtained by decomposing a water-absorbent resin, which can shorten the decomposition time of the water-absorbent resin.

Brief Description of Drawings

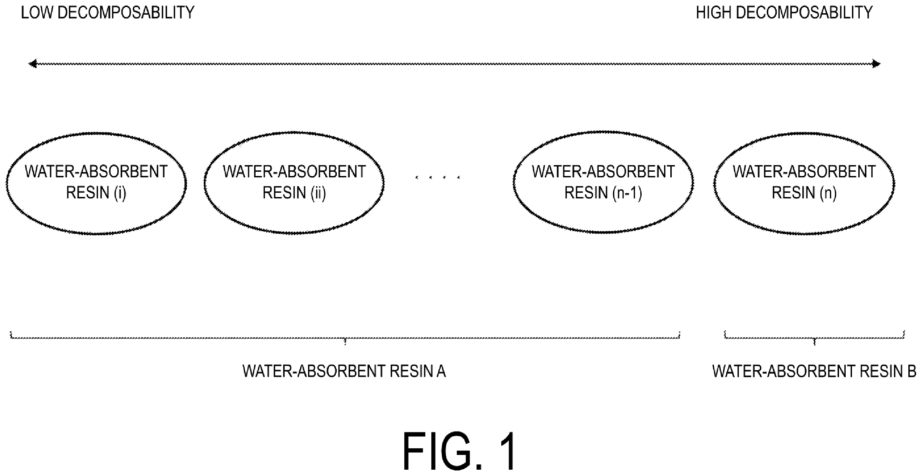

FIG. 1 is a diagram schematically illustrating the concept of a water-absorbent resin (A) and a water-absorbent resin (B).

Description of Embodiments

Hereinafter, preferred embodiments of the present invention will be described. It should be noted that the present invention is not only limited to the following embodiments and can be variously modified within the scope of the claims. The embodiments described in the present specification can be combined in any way to constitute another embodiment.

In the present specification, the term "(meth)acrylic" includes both acrylic and methacrylic. Thus, for example, the term "(meth)acrylic acid" includes both acrylic acid and methacrylic acids. The term "acid (salt)" means "an acid and/or a salt thereof".

[1] Method for Producing Solubilized Polymer

One aspect of the present invention is a method for producing a solubilized polymer, including preparing a water-absorbent resin (A), which is a water-absorbent resin to be decomposed; and contacting the water-absorbent resin (A) with a decomposing agent, in which: (i) the contacting is performed in the presence of a water-absorbent resin (B), which is a water-absorbent resin having higher decomposability than the water-absorbent resin (A); or (ii) the contacting is performed in the presence of a decomposed product separately prepared by contacting a water-absorbent resin (B) with a decomposing agent, the water-absorbent resin (B) being a water-absorbent resin having higher decomposability than the water-absorbent resin (A).

(1-1) Water-Absorbent Resin

First, the "water-absorbent resin" will be described.

The water-absorbent resin is a water-swellable water-insoluble polymer gelling agent, and without any limitations, refers to a common water-absorbent resin having a fluid retention capacity of 10 times or more and 1000 times or less. More specifically, the water-absorbent resin before absorbing a liquid to be absorbed (hereinafter, also referred to as "initial water-absorbent resin") can satisfy, as the "water swellability", a property in which CRC is 5 g/g or more. The definition of CRC will be described later. The water-absorbent resin disclosed herein refers to at least one of the water-absorbent resin (A) and the water-absorbent resin (B), unless otherwise specified.

In the present technical field, the water-absorbent resin may mean each particle, but in the present specification, the water-absorbent resin means an aggregate of particles, unless otherwise specified.

The water-absorbent resin may be a polymer derived from a carboxyl group-containing unsaturated monomer. The water-absorbent resin may contain a polymer having partially neutralized carboxyl groups. Specific examples of the water-absorbent resin include a polyacrylic acid (salt)-based resin, a polysulfonic acid (salt)-based resin, a maleic anhydride (salt)-based resin, a polyacrylamide-based resin, a polyvinyl alcohol-based resin, a polyethylene oxide-based resin, a polyaspartic acid (salt)-based resin, a polyglutamic acid (salt)-based resin, a polyalginic acid (salt)-based resin, a starch-based resin, a cellulose-based resin, a (meth)acrylate crosslinked polymer, a saponified crosslinked product of a (meth)acrylate-vinyl acetate copolymer, a starchacrylate graft polymer, and a crosslinked product thereof.

Moreover, in the present specification, the "water-absorbent resin" is not limited to an aspect in which the entire amount (100 mass%) is only the water-absorbent resin, and the water-absorbent resin may be a water-absorbent resin composition containing an additive or the like. In addition, the water-absorbent resin in the present specification may include a fresh water-absorbent resin newly produced in the water-absorbent resin production process, may include a spent water-absorbent resin contained in a spent absorbent article, or may be a mixture thereof. Here, the spent absorbent article refers to a spent hygienic material that has absorbed body fluids such as excrement or blood. Examples of the hygienic material include paper diapers, sanitary napkins, adult incontinence products (incontinence pads), and pet sheets. The concept of the spent water-absorbent resin includes a water-absorbent resin that has absorbed body fluids such as excrement or blood in a spent absorbent article, a water-absorbent resin that has been used for the production of an absorbent article even if it has not absorbed a body fluid such as excrement or blood, and a fine powder or off-specification product of a water-absorbent resin generated during the production process of a water-absorbent resin. The spent water-absorbent resin contained in a spent absorbent article may be in a state of a hydrogel in which water such as urine water is incorporated. Thus, the water-absorbent resin may contain a water-absorbent resin in a hydrogel state. As such, the water-absorbent resin (A) and the water-absorbent resin (B) may each independently be a spent water-absorbent resin or a fresh water-absorbent resin newly produced in the water-absorbent resin production process.

The mass of the water-absorbent resin in the present specification is a value in terms of solid content unless otherwise specified. It should be noted that, when the mass of the water-absorbent resin contained in a spent absorbent article (for example, a spent paper diaper) is unknown, the mass of the water-absorbent resin can be measured by calculating the mass of the water-absorbent resin contained in an unspent absorbent article (for example, an unspent paper diaper) and a general value of the fluid retention capacity of the water-absorbent resin in the spent absorbent article (for example, the spent paper diaper), or assuming that the content (in terms of solid content) of the water-absorbent resin based on the total mass of the spent absorbent article (for example, the spent paper diaper) is 3 mass% or more and 9 mass% or less.

In one embodiment of the present invention, the CRC of the water-absorbent resin (which is a raw material of the solubilized polymer) is 20 g/g or more, 25 g/g or more, 27 g/g or more, or 30 g/g or more. In one embodiment of the present invention, the CRC of the water-absorbent resin (which is a raw material of the solubilized polymer) is 70 g/g or less, 50 g/g or less, or 45 g/g or less. It should be noted that the definition of CRC is as described in the section of Examples.

In one embodiment of the present invention, the AAP (0.3 psi) of the water-absorbent resin (which is a raw material of the solubilized polymer) is 10 g/g or more, 15 g/g or more, 20 g/g or more, 22 g/g or more, 24 g/g or more, or 25 g/g or more. In one embodiment of the present invention, the AAP (0.3 psi) of the water-absorbent resin (which is a raw material of the solubilized polymer) is 50 g/g or less, 45 g/g or less, 40 g/g or less, 35 g/g or less, or 30 g/g or less. It should be noted that the definition of AAP is as described in the section of Examples.

(1-2) Solubilized Polymer

Then, the "solubilized polymer" as the target product will be described.

The "solubilized polymer" is a polymer produced by decomposing a water-swellable (i.e., water-insoluble) water-absorbent resin and allowing it to be solubilized in water (water-soluble polymer). The polymer solubilized in water may be present in a state of being dissolved in water, or may be present as a solid and dissolved when put into water. The solubilized polymer may be all solubilized in water, or may be a partially solubilized product containing a polymer that is not partially solubilized. When no undissolved residue is seen in water and all the water-absorbent resin is dissolved in water in appearance (when the presence of the interface between the water-absorbent resin and water cannot be visually recognized in water), it is presumed that a solubilized polymer is produced. Although a partially undissolved swelling substance remains, the water-absorbent resin is reduced compared to that before the solubilization treatment; the water-absorbent resin is thus partially solubilized, and a solubilized polymer is produced. Therefore, even when a partially undissolved swelling substance remains in an aqueous solubilized polymer solution after solubilization (decomposition), it can be referred to as an aqueous solubilized polymer solution (or dispersion). The produced solubilized polymer may be discarded, or may be reused as a raw material for production of a new water-absorbent resin.

In one embodiment of the present invention, the proportion of the solubilized water-absorbent resin is not particularly limited, and as described above, as long as the water-absorbent resin (water-absorbent resin (A)) is even partially solubilized, it is included in the category of the "method for producing a solubilized polymer"; however, it is preferably 50 mass% or more, 60 mass% or more, 70 mass% or more, 80 mass% or more, or 90 mass% or more (the upper limit is 100 mass%) with respect to all the water-absorbent resins. In addition, the proportion of the solubilized water-absorbent resin (A) is not particularly limited, and is preferably 50 mass% or more, 60 mass% or more, 70 mass% or more, 80 mass% or more, or 90 mass% or more (the upper limit is 100 mass%) with respect to the water-absorbent resin (A).

The proportion of the solubilized water-absorbent resin can be determined, for example, by the following method.

<Method for Determining Proportion of Solubilized Water-Absorbent Resin>

The solubilized polymer obtained by solubilizing the water-absorbent resin was filtered through a 100-mesh stainless steel wire mesh whose mass had been measured in advance, and the insoluble gel remaining on the mesh was sufficiently washed with a large amount of deionized water. Accordingly, the water-soluble (solubilized) component contained in the solubilized polymer was washed away, and only the insoluble water-absorbent resin gel remained on the wire mesh.

Then, the wire mesh on which the insoluble water-absorbent resin gel was left was dried in a hot air circulation oven at 180°C for 3 hours to remove volatile components. The proportion of the solubilized water-absorbent resin was determined according to Equation (a) below.

Proportion of solubilized water-absorbent resin (mass%) = {1 - [(total mass of wire mesh and insoluble water-absorbent resin after drying) - mass of wire mesh only]/(mass of water-absorbent resin before solubilization) × 100 ··· Equation (a)    Equation (a)

In this way, when the method of determining the proportion of the solubilized water-absorbent resin is performed, the polymer that passes through the mesh can be considered as the solubilized polymer present in a state of being dissolved in water, and the polymer that passes through the mesh and falls down when the insoluble gel remaining on the mesh is sufficiently washed with a large amount of deionized water, in other words, the polymer that is confined in the gel in a solid form and is not dissolved in water at first but is dissolved by being contacted with at least a part of water by washing with a large amount of water can also be considered as the solubilized polymer present as a solid.

In one embodiment of the present invention, the mass-average molecular weight of the solubilized polymer is 10000 or more and 1000000 or less, 15000 or more and 750000 or less, or 20000 or more and 500000 or less. The mass-average molecular weight can also be calculated from the elution time of the measurement sample using GPC and a calibration curve (standard curve) created from the molecular weight and elution time using a standard polymer sample (standard polystyrene, etc.) with a known molecular weight.

In one embodiment of the present invention, the solubilized polymer may be in a hydrous form, and in this case, the solid content concentration of the aqueous solubilized polymer solution may be 1 mass% or more and less than 100 mass%, 3 mass% or more and 98 mass% or less, or 5 mass% or more and 95 mass% or less.

(1-3) Decomposing Agent

In one aspect of the present invention, the solubilized polymer can be produced by preparing a water-absorbent resin (A), which is a water-absorbent resin to be decomposed, and contacting the water-absorbent resin (A) with a decomposing agent.

An oxidizing agent may be used as the decomposing agent. Thus, in one embodiment of the present invention, the decomposing agent includes an oxidizing agent. Here, the oxidizing agent is a compound having oxidizability, and is a compound that generates a radical by heating. Examples of the oxidizing agent include persulfates such as sodium persulfate, potassium persulfate, and ammonium persulfate; peroxides such as hydrogen peroxide, alkyl hydroperoxides, and peresters; perchlorates such as sodium perchlorate and potassium perchlorate; periodates such as sodium periodate and potassium periodate; percarbonates; perborates; and peracetic acid. The oxidizing agents may be used singly, or in combinations of two or more thereof. Among these, hydrogen peroxide is preferably used.

A reducing agent may be used as the decomposing agent. The reducing agent is a compound having reducibility, and is a compound that generates a radical when used in combination with the aforementioned oxidizing agent or with a compound that generates transition metal ions to be described later. Examples of the reducing agent include sulfurous acid (salt), hydrogen sulfite (salt), phosphorous acid (salt), hypophosphorous acid (salt), thiosulfuric acid (salt), formic acid, oxalic acid, erythorbic acid, amine, ascorbic acid (salt) or a derivative thereof (for example, L-ascorbic acid (salt), isoascorbic acid (salt), and alkyl ester of ascorbic acid), phosphoric ester, and sulfuric ester. The reducing agents may be used singly, or in combinations of two or more thereof. Among these, sulfurous acid (salt), hydrogen sulfite (salt), L-ascorbic acid (salt), and isoascorbic acid (salt) are preferably used.

Transition metal ions may be used as the decomposing agent. Examples of the transition metal ion include $Cu^{2+}$, $Ag^+$, $Fe^{2+}$, $Fe^{3+}$, $Al^{3+}$, $Ni^{2+}$, and $Mn^{2+}$. The transition metal ions may be used singly, or in combinations of two or more thereof. Examples of the compound that generates the transition metal ion include chlorides and hydrates thereof, such as ferrous chloride; organic acid salts and hydrates thereof, such as ferrous fumarate, ferrous oxalate, ferrous chloride, sodium ferrous citrate, ferrous gluconate, ferrous citrate, and ferrous acetate; sulfates and hydrates thereof, such as ferrous sulfate.

An alkali compound may be used as the decomposing agent. The alkali compound is a compound that solubilizes the crosslinked portion of the water-absorbent resin by alkali hydrolysis. Examples of the alkali compound include hydroxides of alkali metals such as lithium hydroxide, potassium hydroxide, and sodium hydroxide; hydroxides of alkaline earth metals such as magnesium hydroxide and calcium hydroxide; ammonia; and amine compounds such as aliphatic amines, alicyclic amines, and aromatic amines. The alkali compounds may be used singly, or in combinations of two or more thereof.

In one embodiment of the present invention, the decomposing agent contains at least two selected from the oxidizing agent, the reducing agent, and the transition metal ion. In one embodiment of the present invention, the decomposing agent contains the oxidizing agent, the reducing agent, and the transition metal ion. In one embodiment of the present invention, the decomposing agent contains at least two selected from the peroxide, ascorbic acid (salt) or a derivative thereof, and the transition metal ion. In one embodiment of the present invention, the decomposing agent contains the peroxide, ascorbic acid (salt) or a derivative thereof, and the transition metal ion.

(1-4) Evaluation of Decomposability of Water-absorbent Resin

In one aspect of the present invention, in producing a solubilized polymer using the water-absorbent resin (A) as at least one of raw materials, the contacting of the water-absorbent resin (A) with the decomposing agent is performed in the presence of the water-absorbent resin (B), which is a water-absorbent resin having higher decomposability than the water-absorbent resin (A), or alternatively, the water-absorbent resin (B), which is a water-absorbent resin having higher decomposability than the water-absorbent resin (A), is contacted with a decomposing agent to separately prepare a solubilized polymer of the water-absorbent resin (B) (in the present specification, this is also referred to as "decomposed product"), and the contacting of the water-absorbent resin (A) with the decomposing agent is performed in the presence of the decomposed product.

The evaluation of the decomposability of the "water-absorbent resin" can be determined by decomposing the same amount of two or more water-absorbent resins under the same decomposition conditions and by the length of the decomposition time.

When the decomposability of two types of water-absorbent resins is evaluated, the water-absorbent resin having a shorter decomposition time can be used as the water-absorbent resin (B).

The case of evaluating the decomposability of three or more types of water-absorbent resins will be described in several embodiments. In FIG. 1, n types of water-absorbent resins having different decomposability are prepared. The n types of water-absorbent resins may differ in at least some of the types of raw materials and/or the amount(s) used. Among these, the water-absorbent resin (i) has the lowest decomposability (the longest decomposition time), and the water-absorbent resin (n) has the highest decomposability (the shortest decomposition time). In one embodiment of the production method of the present invention, as shown in FIG. 1, the water-absorbent resin (n) may be the water-absorbent resin (B), and a combination of the water-absorbent resin (i) to the water-absorbent resin (n-1) may be the water-absorbent resin (A).

Here, when the decomposability of "water-absorbent resin" which is a combination of a plurality of water-absorbent resins is evaluated, since the "decomposability of water-absorbent resin" of the present invention is to evaluate the average decomposability of an aggregate of particles forming the water-absorbent resin, it is preferable to uniformly mix the combined water-absorbent resins (in FIG. 1, it is particularly preferable to uniformly mix the water-absorbent resin (A) consisting of a combination of the water-absorbent resin (i) to the water-absorbent resin (n-1)). On the other hand, if the water-absorbent resin has already been formed into a uniform aggregate of particles, uniform mixing is not necessary. For example, as shown in [Production Example 1] in the section of Examples, when a water-absorbent resin is produced in one batch, the resulting water-absorbent resin is already a uniform aggregate of particles, and therefore, uniform mixing is not necessary. The same applies to the water-absorbent resin produced in [Production Example 2] in the section of Examples, since the water-absorbent resin has already been a uniform aggregate of particles. On the other hand, if water-absorbent resins different in at least a part of the types of raw materials and/or the amount(s) used are produced in different batches and combined to form a water-absorbent resin, it is preferable to mix the water-absorbent resins so as to form a uniform aggregate in order to evaluate the average decomposability of the aggregate of particles.

In one embodiment of the production method of the present invention, as a modification of FIG. 1, the "combination of the water-absorbent resin (n) and at least one water-absorbent resin having lower decomposability than the water-absorbent resin (n) (for example, the water-absorbent resin (n-1))" may be the water-absorbent resin (B), and the "other water-absorbent resins (in the present embodiment, the combination of the water-absorbent resin (n-2) to the water-absorbent resin (i))" may be the water-absorbent resin (A), although the water-absorbent resins (A) and (B) are not shown. For example, when there are five types of water-absorbent resins having different decomposability, the "combination of the water-absorbent resin (iv) to the water-absorbent resin (v)" can be considered as the water-absorbent resin (B), and the "combination of the water-absorbent resin (i) to the water-absorbent resin (iii)" can be considered as the water-absorbent resin (A).

In one embodiment of the production method of the present invention, as a modification of FIG. 1, a water-absorbent resin (n + 1) having higher decomposability than the water-absorbent resin (n) is prepared, whereby the water-absorbent resin (n + 1) can be used as the water-absorbent resin (B), and the "combination of the water-absorbent resin (i) to the water-absorbent resin (n)" can be used as the water-absorbent resin (A), although the water-absorbent resins (A) and (B) are not shown.

As described above, the decomposability of the water-absorbent resin (A) and the water-absorbent resin (B) can be determined by the length of the decomposition time when the aggregate of the particles forming the water-absorbent resin (A) and the aggregate of the particles forming the water-absorbent resin (B) are decomposed under the same decomposition conditions.

The production method according to one embodiment of the present invention may include a confirmation step of confirming the decomposability of the water-absorbent resin (A) (confirming the decomposition time). It is also preferable to prepare the water-absorbent resin (B), which is a water-absorbent resin having higher decomposability than the water-absorbent resin (A), after the confirmation step.

Examples of the method for preparing the water-absorbent resin (B) (i.e., a water-absorbent resin having high decomposability) include a method of preparing a water-absorbent resin having a smaller amount of an internal crosslinking agent as the water-absorbent resin (B), a method of preparing a water-absorbent resin using a type of internal crosslinking agent that is more decomposable than the type of internal crosslinking agent used in the water-absorbent resin (A), and a method of synthesizing the water-absorbent resin (B) by a polymerization method in which the decomposition is more easily caused than in the polymerization method used in the water-absorbent resin (A). Even if the amount and type of internal crosslinking agent in the water-absorbent resin (A) are unknown, the water-absorbent resin (B) can be prepared by using a type of internal crosslinking agent that is easily decomposable as described later and significantly reducing the amount used (by repeating it several times as necessary).

Examples of the polymerization method in which the decomposition is easily caused include "aqueous solution polymerization of a pre-neutralized product", and examples of the polymerization method in which the decomposition is hardly caused include "reverse phase suspension polymerization" and "post-neutralization aqueous solution polymerization". The "aqueous solution polymerization of a pre-neutralized product" method is an aqueous solution polymerization method using a monomer neutralized in advance, and examples thereof include polymerization methods described in JP 2007-191708 A, JP 2004-155963 A, WO 2013/073682, and the like. Examples of the "reverse phase suspension polymerization" method include polymerization methods described in JP 03-227301 A, JP 11-005808 A, WO 2004/083284, WO 2009/025235, WO 2013/018571, and the like. The "post-neutralization aqueous solution polymerization" method is a method in which an unneutralized monomer is subjected to aqueous solution polymerization followed by neutralization, and examples thereof include polymerization methods described in JP 10-101735 A, JP 01-103606 A, JP 62-054751 A, JP 2002-527547 A, JP 03-174414 A, and the like. The "pre-neutralization" and the "post-neutralization" are also described in detail in "(2-1) Aqueous Monomer Solution Preparation Step" described later.

In one embodiment of the present invention, the water-absorbent resin (B) is obtained through aqueous solution polymerization of a pre-neutralized product. More specifically, the water-absorbent resin (B) is obtained through polymerization of acrylic acid (salt) which has been partially or entirely neutralized. In one embodiment of the present invention, the water-absorbent resin (A) is obtained through reverse phase suspension polymerization. More specifically, the water-absorbent resin (A) is obtained by, for example, dispersing an aqueous solution containing acrylic acid (salt) in an organic solvent and polymerizing the aqueous solution. In one embodiment of the present invention, the water-absorbent resin (A) is obtained through post-neutralization aqueous solution polymerization. More specifically, for example, the water-absorbent resin (A) is obtained through neutralization after acrylic acid polymerization.

In one embodiment of the present invention, the ratio of the decomposition time (min) of the water-absorbent resin (A) to the decomposition time (min) of the water-absorbent resin (B) is 1.5 or more, 1.6 or more, 1.7 or more, 1.8 or more, or 1.9 or more. In one embodiment of the present invention, the ratio of the decomposition time (min) of the water-absorbent resin (A) to the decomposition time (min) of the water-absorbent resin (B) is not particularly limited because the desired effects of the present invention can be more efficiently obtained when a water-absorbent resin having higher decomposability is used; however, if an example is given, it is, for example, 100 or less, 50 or less, 30 or less, or 10 or less, but may be a ratio exceeding this. The conditions for measuring the "decomposition time" referred to herein may be as follows. When a fresh water-absorbent resin or a spent water-absorbent resin that has been dried (in equilibrium with the humidity in the air) is used as the water-absorbent resin, 73.3 parts by mass of deionized water is added to 10.0 parts by mass of the water-absorbent resin, and the mixture is left to stand at room temperature for 12 hours or more (particularly 12 hours) to prepare a gel-like water-absorbent resin. When a spent gel-like water-absorbent resin is used, it is dried (in equilibrium with the humidity in the air) to obtain a water-absorbent resin, and 73.3 parts by mass of deionized water is added to 10.0 parts by mass of the water-absorbent resin, and the mixture is left to stand at room temperature for 12 hours or more (particularly, 12 hours) to prepare a gel-like water-absorbent resin. To a reaction vessel, 100 parts by mass of the gel-like water-absorbent resin and 0.67 parts by mass of a 30 mass% aqueous hydrogen peroxide solution as a decomposing agent are added, and the mixture is mixed by stirring 100 turns or more over 2 minutes (particularly, 100 turns over 2 minutes) with a stirring means such as a spatula to obtain a mixture, and the reaction vessel containing the mixture is placed in a thermostatic bath at 80°C. The time point of the placement is defined as the start of the decomposition, and the decomposition time is determined according to "(c) Decomposition time" in the section of Examples. In this way, regardless of whether the water-absorbent resin is in a dry state or a hydrous (gel) state, the specified amount of water and the specified amount of the decomposing agent are added to 10.0 parts by mass (in terms of solid content) of the water-absorbent resin to obtain a mixture, and a reaction vessel containing the mixture is placed in a thermostatic bath at 80°C to determine the decomposition time. It should be noted that the conditions for measuring the "decomposition time" may be scaled up to the same magnification. It should be noted that the decomposition conditions for preparing the solubilized polymer in one aspect of the present invention may be the same as or different from the above-described conditions.

(1-5) Internal Crosslinking Agent

The internal crosslinking agent used for the production of the water-absorbent resin may be an internal crosslinking agent having two or more polymerizable unsaturated groups (such as an allyl group or a (meth) acrylate group), or an internal crosslinking agent having thermal decomposability at a drying temperature. Specific examples of the internal crosslinking agent used for the production of the water-absorbent resin include N,N'-methylenebis(meth) acrylamide, (poly)ethylene glycol di(meth)acrylate, (poly)propylene glycol di(meth)acrylate, trimethylolpropane di(meth)acrylate, trimethylolpropane tri(meth)acrylate, glycerol tri(meth)acrylate, glycerol acrylate methacrylate, ethylene oxide-modified trimethylolpropane tri(meth)acrylate, pentaerythritol tetra(meth)acrylate, dipentaerythritol hexa(meth)acrylate, triallyl cyanurate, triallyl isocyanurate, triallyl phosphate, triallylamine, poly(meth)allyloxyalkane, (poly) ethylene glycol diglycidyl ether, glycerol diglycidyl ether, ethylene glycol, polyethylene glycol, propylene glycol, glycerol, pentaerythritol, ethylenediamine, polyethyleneimine, and glycidyl (meth)acrylate. The number of alkylene glycol units (hereinafter, may be denoted as n) may be 1 or more and 100 or less, 6 or more and 50 or less, 6 or more and 20 or less, or 6 or more and 10 or less. Among the above, examples of the type of internal crosslinking agent that are easily decomposable include (poly)ethylene glycol di(meth)acrylate, ethylene oxide-modified trimethylolpropane tri(meth)acrylate, and polyethylene glycol. In one embodiment of the present invention, the ethylene glycol unit (n) of (poly)ethylene glycol di(meth) acrylate may be, for example, 1 or more and 100 or less, 6 or more and 50 or less, 6 or more and 20 or less, or 6 or more and 10 or less.

The amount of the internal crosslinking agent used in the production of the water-absorbent resin may be 0.0001 mol% or more and 10 mol% or less, 0.001 mol% or more and 5 mol% or less, or 0.01 mol% or more and 1 mol% or less with respect to the total amount of the monomers (excluding the internal crosslinking agent). As described above, the amount of the internal crosslinking agent used in the water-absorbent resin (B) is preferably set to be smaller than the amount of the internal crosslinking agent used in the water-absorbent resin (A).

(1-6) Embodiments of Producing Solubilized Polymer

One aspect of the present invention is a method for producing a solubilized polymer, including preparing a water-absorbent resin (A), which is a water-absorbent resin to be decomposed; and contacting the water-absorbent resin (A) with a decomposing agent, in which: (i) the contacting is performed in the presence of a water-absorbent resin (B), which is a water-absorbent resin having higher decomposability than the water-absorbent resin (A); or (ii) the contacting is performed in the presence of a decomposed product separately prepared by contacting a water-absorbent resin (B) with a decomposing agent, the water-absorbent resin (B) being a water-absorbent resin having higher decomposability than the water-absorbent resin (A).

The water-absorbent resin (A) is defined as a "water-absorbent resin to be decomposed", but (i) when the contacting is performed in the presence of the water-absorbent resin (B), the target to be decomposed includes not only the water-absorbent resin (A) but also the water-absorbent resin (B), and a solubilized polymer is produced by decomposing these. That is, the target to be decomposed includes not only the water-absorbent resin (A) but also the water-absorbent resin (B). Similarly, in the case (ii) where the contacting is performed in the presence of a decomposed product and the decomposed product contains a part of the polymer that has not been solubilized, the target to be decomposed includes not only the water-absorbent resin (A) but also the polymer that has not been solubilized, and a solubilized polymer is produced by decomposing these. That is, the target to be decomposed may include not only the water-absorbent resin (A) but also the polymer that is derived from the decomposed product and has not been solubilized.

The mechanism by which the decomposition time of the water-absorbent resin is shortened in the production method of one aspect of the present invention is presumed to be as follows. However, the technical scope of the present invention is not limited by the mechanism. In other words, it is considered that, at the time of decomposition of the water-absorbent resin (A), the decomposed product of the water-absorbent resin (B) present functions like a plasticizer, thereby suppressing the water-absorbent resin (A) from aggregating, and increasing the surface area of the water-absorbent resin (A), and therefore, the frequency of contact of the decomposing agent with the water-absorbent resin (A) is improved, and the decomposition of the water-absorbent resin (A) is promoted.

As the method for producing a solubilized polymer by contacting the water-absorbent resin (A) with the decomposing agent, various methods can be used, provided that (i) the contacting is performed in the presence of the water-absorbent resin (B), which is a water-absorbent resin having higher decomposability than the water-absorbent resin (A); or (ii) the contacting is performed in the presence of a decomposed product separately prepared by contacting a water-absorbent resin (B) with a decomposing agent, the water-absorbent resin (B) being a water-absorbent resin having higher decomposability than the water-absorbent resin (A). For example, a technique of heat treatment in the presence of hydrogen peroxide as a decomposing agent (for example, JP 04-317785 A), a technique of using ascorbic acid, which is a reducing agent, as a decomposing agent under conditions of pH4 or higher and pH7.5 or lower (for example, JP 05-247221 A), a technique of decomposing using a reducing agent and a transition metal ion as a decomposing agent (for example, JP 2019-131789 A), a technique of decomposing by heating in the presence of an oxidative aqueous salt as a decomposing agent (for example, WO 2021/042113), a technique of decomposing using ozone water as a decomposing agent (for example, JP 2017-100133 A), a technique of decomposing using an oxidizing agent and a transition metal ion such as an iron ion or a copper ion in combination as a decomposing agent (for example, JP 11-172039 A), a technique of decomposing using an alkali compound as a decomposing agent (for example, JP 2020-49398 A), and the like can be used. Also, for example, before the water-absorbent resin is decomposed and/or during the period from the start of the decomposition to the completion of the decomposition, a shearing force may be applied to the water-absorbent resin to reduce the particle size of the water-absorbent resin. By reducing the particle size of the water-absorbent resin to be (being) subjected to contacting with the decomposing agent in advance, compared to the particle size of the prepared water-absorbent resin, the surface area of the water-absorbent resin increases, and the time required to obtain a solubilized polymer can be shortened. The reduction of the particle size of the water-absorbent resin may be performed on either the water-absorbent resin in a dry state (in equilibrium with the humidity in the air) or the water-absorbent resin in a hydrous state. The disintegrating apparatus for applying a shearing force to the water-absorbent resin to reduce its particle size is not particularly limited, and when the water-absorbent resin is in a dry state, a jaw crusher, a cone crusher, an impact crusher, a roll crusher, an autogenous pulverizer, a stamp mill, a stone mill type pulverizer, a mortar mill, a ring mill, a roller mill, a jet mill, a pin mill, a vibration mill, a planetary mill, a bead mill, an attritor, a hammer mill, a cutter mill, or the like can be used. When the water-absorbent resin is in the form of gel in a hydrous state, a gel grinding apparatus equipped with a plurality of rotary stirring blades such as a batch-type or continuous-type double-arm kneader, a single-screw extruder, a twin-screw extruder, a meat chopper, a disperser, a homomixer, a colloid mill, a roll mill, a high-pressure injection disperser, a rotary mill, a vibration mill, a planetary mill, an attritor, a bead mill, or the like can be used.

The apparatus for producing a solubilized polymer used in the present invention is not particularly limited as long as it is an apparatus capable of decomposing while maintaining desired decomposition conditions constant, and examples thereof include a tank-type decomposition apparatus, a decomposition apparatus with a stirrer, a multi-axial decomposition apparatus, and the like. The inner wall surface of the decomposition apparatus is preferably formed of a corrosion-resistant (acid resistance, alkali resistance) material from the viewpoint of reducing the maintenance frequency of the apparatus and maintaining the performance. Examples of such a corrosion-resistant material include stainless steel, Hastelloy steel, titanium steel, glasslined steel, resin-lined steel, and metal spray coated steel. Examples of the stainless steel include austenitic stainless steels such as SUS304, SUS304L, SUS304LN, SUS312L, SUS316, SUS316L, SUS316N, SUS316LN, SUS317, SUS317N, and SUS317LN; ferritic stainless steel such as SUS430, SUS430F, SUS434, and SUS444; and martensitic stainless steel such as SUS410, SUS410F2, SUS410J1, SUS410S, and SUS431. Examples of the resin-lined steel include those lined with rubber, fluororesins (polytetrafluoroethylene, perfluoroalkoxy alkane, perfluoroethylene propylene copolymer, ethylene tetrafluoroethylene copolymer, polyvinylidene fluoride, and the like), and thermosetting resins (epoxy resin, bisphenol type polyester, vinyl ester, and the like). Examples of the metal spray coated steel include those coated with metal or ceramic by flame spraying, high-speed flame spraying, arc spraying, plasma spraying, or a wire blast method. The lining or coating may be applied to the entire apparatus or may be applied only to a portion where corrosion is particularly likely to occur (such as a gas-liquid interface). Examples of measures for suppressing corrosion other than the use of a corrosion-resistant material include periodic washing of the apparatus with water, sufficient stirring or standing before heating when adding an acid or an alkali to make the pH of the solution uniform, and removal of oxygen in the solution (inert gas replacement, degassing, use of a deoxidizer, and the like).

In one embodiment of the present invention, (i) the contacting of the water-absorbent resin (A) with the decomposing agent is performed in the presence of the water-absorbent resin (B).

In one embodiment of the present invention, the abundance ratio of the water-absorbent resin (B) is 10 parts by mass or more, 20 parts by mass or more, 30 parts by mass or more, 40 parts by mass or more, 45 parts by mass or more, 50 parts by mass or more, 60 parts by mass or more, 70 parts by mass or more, 80 parts by mass or more, or 90 parts by mass or more, per 100 parts by mass of the water-absorbent resin (A). In one embodiment of the present invention, the abundance ratio of the water-absorbent resin (B) is 1000 parts by mass or less, 750 parts by mass or less, 500 parts by mass or less, 400 parts by mass or less, 300 parts by mass or less, 200 parts by mass or less, 150 parts by mass or less, 120 parts by mass or less, 95 parts by mass or less, 85 parts by mass or less, 75 parts by mass or less, 65 parts by mass or less, 55 parts by mass or less, 45 parts by mass or less, 35 parts by mass or less, 25 parts by mass or less, or 20 parts by mass or less, per 100 parts by mass of the water-absorbent resin (A).

In one embodiment of the present invention, the mass ratio of the water-absorbent resin (A) to the water-absorbent resin (B) is 85:15 to 15:85, 85:15 to 55:45, or 85:15 to 60:40. In one embodiment of the present invention, the mass ratio of the water-absorbent resin (A) to the water-absorbent resin (B) is 80:20 to 30:70, 70:30 to 40:60, or 70:30 to 50:50.

In one embodiment of the present invention, the contacting of the water-absorbent resin (A) with the decomposing agent may be performed in the presence of water. It should be noted that the decomposing agent may be in the form of being dissolved or dispersed in water. Therefore, by utilizing the water, the contacting of the water-absorbent resin (A) with the decomposing agent may be performed in the presence of water. Of course, water may be added for the contacting of the water-absorbent resin (A) with the decomposing agent. Examples of the water include tap water, water for industrial use, ionexchanged water, and pure water.

In one embodiment of the present invention, the mixing ratio of water and the water-absorbent resin (A) is not particularly limited, and the amount of water mixed is 50 parts by mass or more and 9900 parts by mass or less, 75 parts by mass or more and 3000 parts by mass or less, or 100 parts by mass or more and 2000 parts by mass or less, per 100 parts by mass of the water-absorbent resin (A).

In one embodiment of the present invention, the amount of the decomposing agent used (the total amount when two or more kinds are used in combination) is 0.001 parts by mass or more and 60 parts by mass or less, 0.003 parts by mass or more and 50 parts by mass or less, or 0.004 parts by mass or more and 40 parts by mass or less, in terms of active ingredients, per 100 parts by mass of the water-absorbent resin (A).

In one embodiment of the present invention, when a transition metal ion is used as at least a part of the decomposing agent, the amount of the compound that generates the transition metal ion used (the total amount when two or more kinds are used in combination) is 0.005 parts by mass or more and 50 parts by mass or less, 0.01 parts by mass or more and 30 parts by mass or less, or 0.02 parts by mass or more and 20 parts by mass or less, in terms of active ingredients, per 100 parts by mass of the water-absorbent resin (A).

In one embodiment of the present invention, when ascorbic acid (salt) or a derivative thereof is used as at least a part of the decomposing agent, the amount of ascorbic acid (salt) or a derivative thereof used (the total amount when two or more kinds are used in combination) is 0.1 parts by mass or more and 50 parts by mass or less, 0.2 parts by mass or more and 30 parts by mass or less, or 0.2 parts by mass or more and 20 parts by mass or less, in terms of active ingredients, per 100 parts by mass of the water-absorbent resin (A).

In one embodiment of the present invention, when a peroxide is used as at least a part of the decomposing agent, the amount of the peroxide used (the total amount when two or more kinds are used in combination) is 0.1 parts by mass or more and 50 parts by mass or less, 0.2 parts by mass or more and 30 parts by mass or less, or 0.3 parts by mass or more and 20 parts by mass or less, in terms of active ingredients, per 100 parts by mass of the water-absorbent resin (A).

In one embodiment of the present invention, the pH of the mixture to be subjected to the decomposition reaction, which contains the water-absorbent resin (A) and the decomposing agent, is adjusted to fall within a range of 6.5 or more and 8.5 or more, 7.0 or more and 8.5 or less, or 7.5 or more and 8.5 or less. The pH of the mixture can be adjusted by adding a pH adjuster such as an acid or a base to the mixture as necessary. Examples of the acid to be used include inorganic acids such as hydrochloric acid, sulfuric acid, nitric acid, and phosphoric acid; and organic acids such as acetic acid and citric acid. Examples of the base that can be used include bases such as sodium hydroxide, sodium carbonate, potassium hydroxide hydroxylation, and magnesium hydroxide. The measurement of pH can be performed with a pH measuring instrument (pH meter: LAQUA act D-71, available from HORIBA, Ltd.). The amount of the pH adjuster is an amount that can be adjusted to a desired pH, and there is no particular limitation.

In one embodiment of the present invention, when a mixture containing the water-absorbent resin (A), the decomposing agent, and the water-absorbent resin (B) (here, in the embodiment of (ii), the "water-absorbent resin (B)" can be read as a "decomposed product prepared separately"), in other words, a mixture to be subjected to the decomposition reaction, is obtained, at least two kinds of these, preferably all of these may be mixed using a continuous mixer in order to mix these as uniformly as possible. In one embodiment of the present invention, the continuous mixer is an apparatus that performs mixing in a manner in which a mixture containing the water-absorbent resin (A), the decomposing agent, and the water-absorbent resin (B) is continuously supplied, and the mixture is mixed while passing through a stirring section inside the continuous mixer and being emitted as a stirred mixture. When a continuous mixer is used, the mixture to be subjected to the decomposition reaction can be more uniformly mixed. From the viewpoint of more uniform mixing, the continuous mixer preferably has a large mixing power. The continuous mixer is not particularly limited as long as it can perform mixing in the above-described manner. Examples of the continuous mixer include a cylindrical mixer, a double-wall conical mixer, a high-speed stirring mixer such as Turbulizer (trade name), a V-shaped mixer, a ribbon mixer, a screw mixer, a double-arm kneader, a pulverizing kneader, a rotary mixer, an air flow mixer, a continuous Loedige mixer, and a continuous Prosia mixer.

In one embodiment of the present invention, in the continuous mixer, while the mixture containing the water-absorbent resin (A), the decomposing agent, and the water-absorbent resin (B) is supplied through a feeder, the mixture is stirred in the stirring section provided inside the continuous mixer, and the mixture after completion of the mixing is emitted through an emission port of the continuous mixer, and these processes are continuously performed.

In one embodiment of the present invention, the mixing time of the mixture containing the water-absorbent resin (A), the decomposing agent, and the water-absorbent resin (B) is, for example, 5 minutes or more and 120 minutes or less, 10 minutes or more and 60 minutes or less, or 15 minutes or more and 45 minutes or less, although it varies depending on the scale, when the time point at which the mixture is supplied to the feeder of the continuous mixer is defined as a start point and the time point at which all the stirred mixture is emitted from the emission port of the continuous mixer is defined as an end point.

In one embodiment of the present invention, the concentration (mass) of all the water-absorbent resins in the mixture containing the water-absorbent resin (A), the decomposing agent, and the water-absorbent resin (B) is 5 mass% or more, 7 mass% or more, 10 mass% or more, 30 mass% or more, 50 mass% or more, or 60 mass% or more, when the mass of the entire mixture is 100 mass%. When the concentration of all the water-absorbent resins contained in the mixture is 5 mass% or more, the amount of a solubilized polymer produced from the mixture can be suitably increased. In one embodiment of the present invention, the concentration (mass) of all the water-absorbent resins in the mixture containing the water-absorbent resin (A), the decomposing agent, and the water-absorbent resin (B) is 90 mass% or less, 80 mass% or less, 70 mass% or less, 60 mass% or less, 55 mass% or less, or 50 mass% or less, when the mass of the entire mixture is 100 mass%. When the concentration of all the water-absorbent resins contained in the mixture is 90 mass% or less, a sufficient amount of the decomposing agent can be contained in the mixture. As a result, the decomposition efficiency can be suitably improved.

As described above, the mixture is mixed by the continuous mixer, and the mixture emitted from the continuous mixer (which is usually in the form of a humidified mixture, a gel mixture, a slurry mixture, or the like) may be supplied to an apparatus for producing a solubilized polymer.

The decomposition of the water-absorbent resin (A) can be accelerated by heating.

In one embodiment of the present invention, the temperature condition for producing a solubilized polymer by contacting the water-absorbent resin (A) with the decomposing agent is, for example, 10°C or more and 130°C or less, 20°C or more and 120°C or less, 30°C or more and 110°C or less, 50°C or more and 100°C or less, or 70°C or more and 100°C or less. By setting the temperature of the mixture containing the water-absorbent resin (A) and the decomposing agent to such a range, the time required to obtain a solubilized polymer can be shortened.

In one embodiment of the present invention, in order to reduce the amount of remaining peroxide (for example, hydrogen peroxide), an additive such as sodium carbonate may be added, and stirring may be performed, for example, at 10°C or more and 90°C or less for 10 minutes or more and 10 hours or less. The amount of remaining hydrogen peroxide can be measured by the method described in Examples.

In one embodiment of the present invention, (ii) for the contacting of the water-absorbent resin (A) with a decomposing agent, the water-absorbent resin (B) is contacted with a decomposing agent to separately prepare a decomposed product (i.e., the solubilized polymer of the water-absorbent resin (B)), and the contacting is performed in the presence of the decomposed product. The decomposing agent used for decomposing the water-absorbent resin (B) may be the same as or different from the decomposing agent used for producing a solubilized polymer. In one embodiment of the present invention, the abundance ratio of the decomposed product is 10 parts by mass or more, 20 parts by mass or more, 30 parts by mass or more, 40 parts by mass or more, 45 parts by mass or more, 50 parts by mass or more, 60 parts by mass or more, 70 parts by mass or more, 80 parts by mass or more, or 90 parts by mass or more, per 100 parts by mass of the water-absorbent resin (A). In one embodiment of the present invention, the abundance ratio of the decomposed product is 500 parts by mass or less, 400 parts by mass or less, 300 parts by mass or less, 200 parts by mass or less, 150 parts by mass or less, 120 parts by mass or less, 95 parts by mass or less, 85 parts by mass or less, 75 parts by mass or less, 65 parts by mass or less, 55 parts by mass or less, 45 parts by mass or less, 35 parts by mass or less, 25 parts by mass or less, or 20 parts by mass or less, per 100 parts by mass of the water-absorbent resin (A). In the present embodiment, except for the above, the description of the embodiment (i) in which the contacting of the water-absorbent resin (A) with the decomposing agent is performed in the presence of the water-absorbent resin (B) can be similarly applied.

Method for producing a Water-Absorbent Resin, and Method for Producing Water-Absorbent Resin Using, as Part of Raw Material, Solubilized Polymer Produced by Decomposing Water-Absorbent Resin

[2] At least a part of the raw material of the solubilized polymer, which is the target product of the production method of one aspect of the present invention, is the water-absorbent resin (A), which is a "water-absorbent resin" to be decomposed. The solubilized polymer obtained by contacting the water-absorbent resin (A) with the decomposing agent may be discarded as is, but from the viewpoint of further promoting environmental conservation, a "water-absorbent resin" may be produced using the solubilized polymer as a part of the raw material. Therefore, the following will collectively explain an embodiment of the method for producing a water-absorbent resin and an embodiment of the method for producing a water-absorbent resin using a solubilized polymer as a part of the raw material.

First, the method for producing a water-absorbent resin using a solubilized polymer as a part of the raw material is a production method in which the solubilized polymer obtained by decomposing the water-absorbent resin (A) is used as a raw material in at least any of steps of an aqueous monomer solution preparation step, a polymerization step, a hydrogel grinding step, a drying step, and a surface crosslinking step. Alternatively, the solubilized polymer may be crosslinked with a crosslinking agent (such as an internal crosslinking agent or a surface crosslinking agent) to form a crosslinked polymer, and then the crosslinked polymer may be mixed with a water-absorbent resin to be newly produced in at least one of the steps. Further, the solubilized polymer may be crosslinked with a crosslinking agent to form a crosslinked polymer, and then the crosslinked polymer may be made into a marketable product as is through a process similar to a known process (steps including drying, pulverization, classification, surface treatment, cooling, and particle size adjustment).

(2-1) Aqueous Monomer Solution Preparation Step

This step is a step of preparing an aqueous solution containing an acrylic acid (salt) as a main component (hereinafter referred to as "aqueous monomer solution"). The "main component" means that the amount (content) of acrylic acid (salt) used is typically 50 mol% or more, preferably 70 mol% or more, and more preferably 90 mol% or more (upper limit: 100 mol%) with respect to the whole monomers (excluding the internal crosslinking agent) to be subjected to the polymerization reaction of the water-absorbent resin.

Acrylic Acid

In one embodiment of the present invention, acrylic acid and/or a salt thereof (hereinafter referred to as "acrylic acid (salt)") is used as a monomer that forms the water-absorbent resin. In addition, the "acrylate" is a product obtained by neutralizing the acrylic acid described above with a basic composition described below; however, as the acrylate may be a commercially available acrylate (for example, sodium acrylate), or may be obtained by neutralizing in a production plant for the water-absorbent resin.

Basic Composition

In one embodiment of the present invention, the "basic composition" refers to a composition containing a basic compound, such as a commercially available aqueous sodium hydroxide solution. Specific examples of the basic compound include alkali metal salts, such as a carbonate and/or a hydrogen carbonate of an alkali metal, and alkali metal hydroxides such as sodium hydroxide, potassium hydroxide, and lithium hydroxide. Examples of the basic compound other than these include ammonia and organic amines.

Neutralization

As the neutralization in one embodiment of the present invention, either the neutralization of acrylic acid (before polymerization) (also referred to as pre-neutralization) or the neutralization of a crosslinked hydrogel polymer obtained by crosslinking polymerization of acrylic acid (after polymerization) (hereinafter referred to as "post-neutralization") can be selected, or both can be used in combination. In the case where the solubilized polymer is used as at least a part of the raw material for producing the water-absorbent resin, when the solubilized polymer contains a basic compound, the basic compound neutralizes the acrylic acid before polymerization or the crosslinked hydrogel polymer after polymerization. Therefore, the neutralization percentage of the water-absorbent resin as a final product may be adjusted to a predetermined range by adding the basic compound. It should be noted that, regarding conditions such as the apparatus for performing neutralization, the neutralization temperature, and the residence time, the conditions described in WO 2009/123197, US 2008/0194863 A, and the like can also be applied to the present invention. The neutralization in one embodiment of the present invention may be performed by adding the basic compound to the aqueous monomer solution in a plurality of stages.

The neutralization percentage in one embodiment of the present invention is 10 mol% or more and 90 mol% or less, 40 mol% or more and 85 mol% or less, 50 mol% or more and 80 mol% or less, or 60 mol% or more and 75 mol% or less with respect to the acid group of the monomer. It should be noted that the neutralization percentage of 75 mol% means 25 mol% of acrylic acid and 75 mol% of an acrylate. In addition, it may be referred to as partially neutralized acrylic acid. The neutralization percentage is the same even in the case of post-neutralization.

Other Monomers

In one embodiment of the present invention, the term "other monomers" refers to monomers other than the acrylic acid (salt), and the water-absorbent resin can be produced by using the other monomers in combination with the acrylic acid (salt). Examples of the other monomers include water-soluble or hydrophobic unsaturated monomers. Specifically, the compounds described in US 2005/0215734 A (excluding acrylic acid) are also applied to one embodiment of the present invention.

Internal Crosslinking Agent

The description given in (1-5) above can be similarly applied to the description of the type and amount of the internal crosslinking agent used in one embodiment of the present invention. In one embodiment of the present invention, a method is preferably applied in which a predetermined amount of an internal crosslinking agent is added previously to an aqueous monomer solution, and crosslinking reaction is performed simultaneously with polymerization. In addition to this method, a method for adding an internal crosslinking agent before polymerization and/or after polymerization and then crosslinking; a method for performing radical crosslinking using a radical polymerization initiator; a method for performing radiation crosslinking using an active energy ray such as an electron beam or an ultraviolet ray or the like can also be adopted. Further, these methods may be used in combination.

Other Substances to Be Added to Aqueous Monomer Solution

In one embodiment of the present invention, the following substances can be added during preparation of the aqueous monomer solution.

Specifically, the following can be performed: any of hydrophilic polymers is added such as starch, a starch derivative, cellulose, a cellulose derivative, polyvinyl alcohol, polyacrylic acid (salt), a polyacrylic acid (salt) crosslinker in an amount of preferably 50 mass% or less, more preferably 20 mass% or less, still more preferably 10 mass% or less, particularly preferably 5 mass% or less (the lower limit is 0 mass%); any of a carbonate, an azo compound, a foaming agent such as air bubbles, a surfactant, a chelating agent, a chain transfer agent, and the like is added in an amount of preferably 5 mass% or less, more preferably 1 mass% or less, and still more preferably 0.5 mass% or less (the lower limit is 0 mass%, more than 0 mass%, 0.005 mass% or more, or 0.01 mass% or more); and the like. Further, the above-described substance may be added not only in the form of being added to the aqueous monomer solution, but also in the form of being added during polymerization, and both of these forms may be used in combination.

(2-2) Polymerization Step

The polymerization step is a step of polymerizing an acrylic acid (salt)-based aqueous monomer solution obtained in the aqueous monomer solution preparation step to provide a crosslinked hydrogel polymer (hereinafter, also referred to as a "hydrogel").

Polymerization Initiator

Polymerization initiators used in one embodiment of the present invention are appropriately selected according to a form of polymerization and the like, and are not limited to any particular one. Examples thereof include a thermally decomposable polymerization initiator, a photodecomposable polymerization initiator, or a redox-based polymerization initiator in which a reducing agent that accelerates the decomposition of these polymerization initiators is used in combination. Specifically, one or two or more of the polymerization initiators disclosed in US 7265190 are used. It should be noted that, from the viewpoint of the handling properties of the polymerization initiator, the physical properties of the water-absorbent resin, and the like, a peroxide or an azo compound is preferably used, a peroxide is more preferably used, and a persulfate is still more preferably used. The amount of the polymerization initiator used is preferably 0.001 mol% or more and 1 mol% or less, more preferably 0.001 mol% or more and 0.5 mol% or less, with respect to a monomer. Also, the amount of the reducing agent used is preferably from 0.0001 mol% or more and 0.02 mol% or less, with respect to a monomer. It should be noted that, instead of using the polymerization initiator, the polymerization reaction may be performed by irradiating active energy rays such as radiation, an electron beam, and an ultraviolet ray, or these active energy rays and the polymerization initiator may be used in combination.

Form of Polymerization

The form of polymerization applied in one embodiment of the present invention is not particularly limited, and examples thereof include spraydroplet polymerization, aqueous solution polymerization, or reverse phase suspension polymerization. As specific forms of polymerization, continuous belt polymerization is disclosed in US 4893999, US 6241928, US 2005/215734 A, and the like, and continuous kneader polymerization is disclosed in US 6987151, US 6710141, and the like.

(2-3) Hydrogel Grinding Step

This step is a step of subjecting the hydrogel obtained in the polymerization step to gel grinding with, for example, a screw extruder such as a kneader or a meat chopper, or a gel grinding apparatus such as a cutter mill to obtain a hydrogel in the form of particles (hereinafter, also referred to as "particulate hydrogel"). It should be noted that when the polymerization step is kneader polymerization, the polymerization step and the hydrogel grinding step are performed simultaneously. Further, when a particulate hydrogel is directly produced in the polymerization process, for example, in gas phase polymerization or reverse phase suspension polymerization, the hydrogel grinding step is not performed in some cases. Regarding gel grinding conditions and forms other than those described above, the contents disclosed in WO 2011/126079 may apply.

(2-4) Drying Step

This step is a step of producing a dried polymer by drying the particulate hydrogel produced in the polymerization step and/or the hydrogel grinding step to have a desired resin solid content. The resin solid content is determined from the loss on drying (mass change when 1 g of the water-absorbent resin is heated at 180°C for 3 hours), and is, for example, 80 mass% or more, 85 mass% or more and 99 mass% or less, 90 mass% or more and 98 mass% or less, or 92 mass% or more and 97 mass% or less.

The method for drying the particulate hydrogel is not particularly limited, and examples thereof include heat drying, hot air drying, reduced pressure drying, fluidized bed drying, infrared drying, microwave drying, drum dryer drying, drying through azeotropic dehydration with a hydrophobic organic solvent, and high humidity drying using high temperature water vapor.

The drying temperature (temperature of hot air) in the hot air drying is 120°C or more and 250°C or less, or 150°C or more and 200°C or less. The drying time is, for example, 5 minutes or more and 120 minutes or less. It should be noted that the drying conditions other than the drying temperature, such as the wind speed of hot air and the drying time, can be appropriately set according to the water content and total mass of the particulate hydrogel to be dried and the intended resin solid content; when band drying is performed, various conditions described in WO 2006/100300, WO 2011/025012, WO 2011/025013, WO 2011/111657, and the like, may be applied as appropriate.

(2-5) Surface Crosslinking Step

This step is a step of further providing a portion with a higher crosslinking density on the surface layer (a portion extending several tens of micrometers inward from the surface of the water-absorbent resin precursor) of the water-absorbent resin precursor obtained through the above-described steps, and it may be composed of a mixing step, a heat treatment step, and a cooling step.

In the surface crosslinking step, it is possible to produce a water-absorbent resin that is surface-crosslinked by radical crosslinking, surface polymerization, crosslinking reaction with a surface crosslinking agent, or the like, on the surface of the water-absorbent resin precursor.

Surface Crosslinking Agent

The surface crosslinking agent used in one embodiment of the present invention is not particularly limited, and examples thereof include an organic or inorganic surface crosslinking agent. Examples thereof include an organic surface crosslinking agent that reacts with a carboxyl group, and one or two or more surface crosslinking agents disclosed in US 7183456. More specific examples include: a polyhydric alcohol compound; an epoxy compound; a haloepoxy compound; a polyamine compound or a condensate thereof with the haloepoxy compound; an oxazoline compound; an oxazolidinone compound; a polyvalent metal salt; an alkylene carbonate compound; and a cyclic urea compound.

The amount of the surface crosslinking agent used (the total amount used when a plurality of the surface crosslinking agents are used) is, for example, 0.01 parts by mass or more and 10 parts by mass or less, or 0.01 parts by mass or more and 5 parts by mass or less, per 100 parts by mass of the water-absorbent resin precursor. Further, the surface crosslinking agent may be added in the form of an aqueous solution, and in this case, the amount of water used is 0.1 parts by mass or more and 20 parts by mass or less, or 0.5 parts by mass or more and 10 parts by mass or less, per 100 parts by mass of the water-absorbent resin precursor. Further, when a hydrophilic organic solvent is used as necessary, the amount used is, for example, 10 parts by mass or less, more preferably 5 parts by mass or less, per 100 parts by mass of the water-absorbent resin precursor.

Mixing Step

This step is a step of mixing the water-absorbent resin precursor and the surface crosslinking agent. The method for mixing the surface crosslinking agent is not particularly limited, and examples thereof include a method for preparing a surface crosslinking agent solution in advance, and spraying or dropping the solution onto the water-absorbent resin precursor to mix them. The apparatus for mixing is not particularly limited, and examples thereof include a high-speed stirring type mixer, and more preferably, a high-speed stirring type continuous mixer.

Heat Treatment Step

This step is a step in which heat is applied to the resultant emitted from the mixing step to initiate a crosslinking reaction on the surface of the water-absorbent resin precursor. The apparatus for performing the crosslinking reaction is not particularly limited, and examples thereof include a paddle dryer. The reaction temperature in the crosslinking reaction is appropriately set according to the type of surface crosslinking agent used, and for example, 50°C or more and 300°C or less, more preferably 100°C or more and 200°C or less.

Cooling Step

The apparatus for performing the cooling is, for example, is preferably an apparatus having the same specification as the apparatus used in the heat treatment step.

Addition Form of Solubilized Polymer

Examples of the method of adding the solubilized polymer include a method of adding the solubilized polymer in the form of an aqueous solution, a method of adding the solubilized polymer in the form of a powder after once drying the solubilized polymer, and a method of adding the solubilized polymer in the form of an aqueous dispersion (slurry) in which an undissolved matter partially remains.

When the solubilized polymer is added in the "Aqueous Monomer Solution Preparation Step", the solubilized polymer (or aqueous solution thereof or aqueous dispersion thereof) may be mixed into the aqueous monomer solution, or the solubilized polymer (or aqueous solution thereof or aqueous dispersion thereof) may be mixed with water in advance and then mixed with a monomer (or aqueous solution thereof). From the viewpoint of uniform mixing of the raw materials, it is preferable to mix the solubilized polymer (or aqueous solution thereof or aqueous dispersion thereof) into an aqueous monomer solution.

When the solubilized polymer is added in the "Polymerization Step", the solubilized polymer (or an aqueous solution thereof or an aqueous dispersion thereof) may be added before the start of polymerization, or may be added after the start of polymerization. From the viewpoint of uniformity of the polymer component, it is preferable to add the solubilized polymer before the start of polymerization.

When the solubilized polymer is added in the "Hydrogel Grinding Step", the solubilized polymer (or an aqueous solution thereof or an aqueous dispersion thereof) may be added before the gel grinding or may be added during the gel grinding. Further, the addition may be divided. From the viewpoint of uniformity of the gel component, it is preferable to add the solubilized polymer (or an aqueous solution thereof or an aqueous dispersion thereof) before the gel grinding.

When the solubilized polymer is added in the "Drying Step", the particulate hydrogel and the solubilized polymer (or an aqueous solution thereof or an aqueous dispersion thereof) may be mixed before drying, or may be dried without being mixed.

When the solubilized polymer is added in the "Surface Crosslinking Step", the water-absorbent resin precursor and the solubilized polymer (or an aqueous solution thereof or an aqueous dispersion thereof), which have been dried in advance, may be mixed, or may be treated without being mixed. From the viewpoint of uniform mixing of the surface crosslinking agent solution and the water-absorbent resin precursor, it is preferable to handle all of them in the form of powder by using a solubilized polymer in the form of powder.

The proportion of the solubilized polymer in the entire water-absorbent resin raw materials is 1 mass% or more and 60 mass% or less, preferably 1 mass% or more and 50 mass% or less, more preferably 1 mass% or more and 40 mass% or less, and still more preferably 1 mass% or more and 30 mass% or less.

In all of the above methods for adding the solubilized polymer, it is also possible to crosslink at least a portion of the solubilized polymer and use it as a crosslinked polymer.

(2-6) Water Absorption Properties of Water-Absorbent Resin Produced Using Solubilized Polymer as Part of Raw Materials

As the water absorption properties of the water-absorbent resin produced using the solubilized polymer as a part of the raw materials, the CRC may be 20 g/g or more, 25 g/g or more, 27 g/g or more, or 30 g/g or more. AAP (0.3 psi) may be 10 g/g or more, 15 g/g or more, 20 g/g or more, 22 g/g or more, 24 g/g or more, or 25 g/g or more. It should be noted that the method of measuring the CRC and the AAP will be described later. Also, the above-described examples may be applied to the upper limits of the CRC and the AAP, for example.

The present invention is not limited to each embodiment described above, and it may be modified in various ways within the scope of the claims. Thus, an embodiment achieved by appropriately combining technical means disclosed herein with different embodiments will be included in the technical scope of the present invention.

The present invention includes the following aspects and embodiments.

1. A method for producing a solubilized polymer, including preparing a water-absorbent resin (A), which is a water-absorbent resin to be decomposed; and contacting the water-absorbent resin (A) with a decomposing agent, in which: (i) the contacting is performed in the presence of a water-absorbent resin (B), which is a water-absorbent resin having higher decomposability than the water-absorbent resin (A); or (ii) the contacting is performed in the presence of a decomposed product separately prepared by contacting a water-absorbent resin (B) with a decomposing agent, the water-absorbent resin (B) being a water-absorbent resin having higher decomposability than the water-absorbent resin (A).

2. The method according to 1., in which a mass ratio of the water-absorbent resin (A) to the water-absorbent resin (B) is from 85:15 to 15:85.

3. The method for producing a solubilized polymer according to 1. or 2., in which at least one of the decomposing agents includes an oxidizing agent.

4. The method according to 3., in which the oxidizing agent includes one or more selected from peroxides.

5. The method for producing a solubilized polymer according to any of 1. to 4., in which a ratio of a decomposition time (minute) of the water-absorbent resin (A) to a decomposition time (minute) of the water-absorbent resin (B) is 1.5 or more.

6. The method according to any of 1. to 5., in which at least one of the steps of contacting is performed using a continuous mixer.

7. The method according to any of 1. to 6., in which a concentration of all the water-absorbent resins in a mixture obtained by the contacting is 5 mass% or more and 60 mass% or less when a mass of the entire mixture is 100 mass%.

8. The method according to any of 1. to 7., further including, after preparing the water-absorbent resin (A), reducing a particle size of at least one of the water-absorbent resin (A) and the water-absorbent resin (B) in advance before the contacting.

9. A method for producing a water-absorbent resin, including: obtaining a solubilized polymer by the method according to any of 1. to 8., and using the solubilized polymer as at least a part of a raw material of the water-absorbent resin.

10. The method for producing a water-absorbent resin according to 9., in which a mass of the solubilized polymer to be used is 1 mass% or more and 60 mass% or less with respect to a mass of the whole raw material.

Examples

The present invention will be described more specifically according to the following Examples and Comparative Examples, but the present invention is not limited thereto. Examples obtained by appropriately combining the technical means disclosed in each Example are also included in the scope of the present invention. Unless otherwise specified, measurements were performed under conditions of room temperature (20°C or more and 25°C or less) and relative humidity of 50 ± 5% RH. In addition, "liter" may be denoted as "1" or "L", and "mass%" may be denoted as "wt%" for convenience.

Evaluation Methods

(a) CRC

"CRC" is an abbreviation of "centrifuge retention capacity", and the CRC of the water-absorbent resin indicates the absorption capacity without pressure (unit: g/g) of the water-absorbent resin for 30 minutes with respect to a 0.90 mass% aqueous sodium chloride solution.

0.200 g of a water-absorbent resin was uniformly placed in a bag (85 mm × 60 mm) made of a nonwoven fabric (trade name: Heatron Paper, model: GSP-22, available from Nankoku Pulp Industry Co., Ltd.), heat-sealed, and then immersed in a large excess (usually about 500 ml) of 0.90 mass% aqueous sodium chloride solution at room temperature. After the lapse of 30 minutes, the bag was removed from the solution and drained for 3 minutes using a centrifuge (centrifuge model H-122, available from Kokusan Co., Ltd.,) at the centrifugal force (250 G) described in EDANA ABSORBENCY II 441.1-99, after which the mass W1 (g) of the bag was measured. In addition, the same operation was performed without using the water-absorbent resin, and the mass WO (g) at that time was measured. From these masses W1 and WO, the centrifuge retention capacity (CRC) was calculated according to Equation (1) below. It should be noted that "EDANA" is an abbreviation of European Disposables and Nonwovens Associations.

[Equation 1]

$$CRC \ (g/g) = (W1 - W0)/(\text{mass of water absorbent polymer}) - 1 \cdots \text{Equation (1)}$$

(b) AAP 0.3

"AAP" is an abbreviation of "absorption against pressure", and the AAP of the water-absorbent resin indicates the absorption capacity under pressure (unit: g/g) with respect to a 0.90 mass% aqueous sodium chloride solution.

AAP 0.3 was measured in accordance with NWSP 242.0.R2 (15) except that the condition under pressure was changed from 0.7 psi to 0.3 psi. Specifically, 0.9 g of the water-absorbent composition was swollen under pressure of 2.07 kPa (21 g/cm$^2$, 0.3 psi) for 1 hour using a large excess of 0.9 mass% aqueous sodium chloride solution, and then AAP (absorption capacity under pressure) was measured. "NWSP" is an abbreviation of "Non-Woven Standard Procedures - Edition 2015".

(c) Decomposition time

After adding and mixing a decomposing agent (aqueous solution) to a water-absorbent resin (gel-like simulated spent water-absorbent resin), a reaction vessel containing the mixture was placed at a predetermined temperature (particularly from 80 to 100°C), and the time point of the placement was defined as the start of the decomposition, and thereafter, the state of the mixture was visually confirmed every 10 minutes, and the time point when it was confirmed that the water-absorbent resin (gel-like simulated spent water-absorbent resin) disappeared and was completely solubilized [i.e., the presence of the interface between the water-absorbent resin (gel-like simulated spent water-absorbent resin) and water was no longer visually recognizable] was defined as the end of decomposition.

(d) Solid Content Concentration of Aqueous Solubilized Polymer Solution

An aqueous solubilized polymer solution with a mass Wa (g) was placed on an aluminum dish with a mass Wb (g), and dried in a hot air circulation oven at 180°C for 3 hours, followed by the measurement of the total mass Wc (g) of the solubilized polymer and the aluminum dish. The solid content concentration of the aqueous solubilized polymer solution was calculated according to Equation (2) below.

Solid content concentration of aqueous solubilized polymer solution (mass%) = {(mass Wc - mass Wb)/Wa} × 100          Equation (2)

(e) Mass-Average Molecular Weight, Number-Average Molecular Weight, and Molecular Weight Distribution of Solubilized Polymer

In the present invention, the molecular weights of the solubilized polymer were measured according to the following procedure.

Preparation of Measurement Sample

First, the solubilized polymer was dissolved in the following solvent to prepare a solution at a concentration of 0.1 mass%. Then, the resulting solution of the solubilized polymer was passed through a filter (GL chromatography disk available from GL Sciences Inc., water base 25A, pore diameter 0.2 $\mu$m) to produce a measurement sample.

Solvent: Aqueous solution containing 60 mM of sodium dihydrogen phosphate dihydrate, 20 mM of disodium hydrogen phosphate dodecahydrate, and 400 ppm of sodium azide (pH6.35 or more, pH6.38 or less)

Using the measurement sample, GPC measurement was performed under the following measurement conditions.

GPC Measurement

GPC measurement on the measurement sample was performed using Viscotek TDAmax available from Malvern Instruments Ltd. The measurement apparatus was equipped with size exclusion chromatography, a refractive index detector, a light scattering detector, and a capillary viscometer. The measurement apparatus and measurement conditions were as follows.

Pump, autosampler: Viscotek GPCmax (available from Malvern Instruments Ltd.)
Guard column: OHpak SB-G (available from Showa Denko K.K.)
Column: Two columns of OHpak SB-806MHQ (available from Showa Denko K.K.) connected in series
Detector: Viscotek TDAmax (available from Malvern Instruments Ltd.)
Solvent: Aqueous solution containing 60 mM of sodium dihydrogen phosphate dihydrate, 20 mM of disodium hydrogen phosphate dodecahydrate, and 400 ppm of sodium azide (pH6.35 or more, pH6.38 or less)
Flow rate: 0.5 mL/min
Injection volume: 100 $\mu$L

Pure water from which impurities were sufficiently removed was used as the water to be used in the GPC measurement. In addition, the GPC measurement was performed in a state where the baseline of the detector was stable, in particular, in a state where there was no noise peak in the light scattering detector.

The measurement apparatus was calibrated using polyoxyethylene glycol (mass-average molecular weight (Mw): 21966, molecular weight distribution (Mw/Mn): 1.0, differential refractive index (dn/dc): 0.132, solvent refractive index: 1.33) as a standard sample.

Also, the measurement was performed with the differential refractive index (dn/dc) of the solubilized polymer to be measured set to 0.12 and the solvent refractive index set to 1.33. Data collection and analysis of refractive index, light scattering intensity, and viscosity were performed using software (Viscotek OmniSEC4.7.0 (trade name)).

The mass-average molecular weight (Mw), number-average molecular weight (Mn), and molecular weight distribution (Mw/Mn) of the solubilized polymer were calculated based on the refractive index (RI), light scattering intensity (angle: 7°) (LALS), and data obtained from a viscometer (DP) obtained in the above measurements.

(f) Amount of Remaining Hydrogen Peroxide

The amount of hydrogen peroxide remaining in the aqueous solubilized polymer solutions was calculated by coloring the remaining hydrogen peroxide with titanium sulfate as a coloring reagent and measuring the absorbance thereof according to the following procedure. Specifically, 0.50 g of the aqueous solubilized polymer solution, 8.5 g of pure water for industrial use, and 1.0 g of a 10 mass% aqueous calcium chloride solution were added and mixed to precipitate a decomposed product, and the mixture was filtered with a 0.2 $\mu$m chromatography disk. To the filtrate, 0.30 g of 1 mol/L sulfuric acid (2N) was added and mixed, and then the mixture was colored with 0.10 g of 30 mass% titanium (IV) sulfate. The absorbance was measured using a ratio-beam spectrophotometer U-5100 (available from Hitachi High-Technologies Corporation), a 10 mm rectangular cell attached thereto, and pure water for industrial use as a standard. The absorbance at a wavelength of 410 nm was measured with the spectrophotometer. Meanwhile, a calibration curve sample having a known hydrogen peroxide concentration was similarly reacted with titanium (IV) sulfate to create a standard curve of hydrogen peroxide amount absorbance, and the "amount of remaining hydrogen peroxide in the aqueous solubilized polymer solution" was calculated from the standard curve.

Production Example 1

Into a reaction vessel, 244.8 g of acrylic acid, 1.42 g (0.080 mol% with respect to the carboxyl group-containing unsaturated monomer) of polyethylene glycol diacrylate (molecular weight: 523) as an internal crosslinking agent, 1.83 g of a 1.0 mass% aqueous diethylenetriamine pentaacetic acid·trisodium (DTPA·3Na) solution, 103.7 g of a 48.5 mass% aqueous sodium hydroxide solution, and 388.9 g of deionized water were put and mixed to prepare an aqueous monomer solution (a').

Then, the aqueous monomer solution (a') was cooled with stirring. When the liquid temperature reached 40.0°C, 100.8 g of a 48.5 mass% aqueous sodium hydroxide solution adjusted to 40°C was added and mixed to prepare an aqueous monomer solution (a). At this time, the temperature of the aqueous monomer solution (a) was raised to 78.2°C because of the second stage neutralization heat immediately after the preparation. Immediately after the 48.5 mass% aqueous sodium hydroxide solution was started to be mixed, precipitates were observed; however, the precipitates were gradually dissolved to form a clear homogeneous solution.

Then, to the aqueous monomer solution (a) in a stirred state, 12.1 g of a 4.0 mass% aqueous sodium persulfate solution was added, and immediately thereafter, the mixture was poured into a stainless tray-shaped container (bottom surface 340 × 340 mm, height 25 mm, inner surface: Teflon (trade name) coating) in an open-to-atmosphere system. The time from the start of the second stage neutralization to the pouring of the aqueous monomer solution (a) into the tray-shaped container was set to 55 seconds, a hot plate was used as the tray-shaped container, and heating was performed until the surface temperature reached 40°C. The polymerization reaction was started 60 seconds after the aqueous monomer solution (a) was poured into the tray-shaped container. In the polymerization reaction, the polymerization solution was expanded and foamed in all directions while generating water vapor, and then was shrunk to a size slightly larger than that of the tray-shaped container. A crosslinked hydrogel polymer was taken out (hereinafter referred to as "hydrogel") (1) 3 minutes after the start of the polymerization reaction. It should be noted that these series of operations were performed in an open-to-atmosphere system.

The hydrogel (1) produced in the polymerization reaction was cut into a strip shape and subjected to gel grinding with a meat chopper having a die diameter of 7.5 mm, and then the hydrogel (1) was spread on a 50-mesh wire mesh and dried with hot air at 190°C for 60 minutes.

Subsequently, the obtained product was pulverized using a vibration mill, and further classified with JIS standard sieves having mesh sizes of 850 $\mu$m and 150 $\mu$m, thereby preparing a water-absorbent resin precursor (1) in an irregularly crushed shape.

A surface crosslinking agent solution containing 0.030 parts by mass of ethylene glycol diglycidyl ether, 1.35 parts by mass of propylene glycol, and 3.15 parts by mass of deionized water were uniformly mixed per 100 parts by mass of the resulting water-absorbent resin precursor (1), and a heat treatment was performed at 100°C for 45 minutes.

Thereafter, the mixture was cooled and passed through a JIS standard sieve with an opening of 710 μm, thereby preparing a water-absorbent resin (A). The resulting water-absorbent resin (A) had a CRC of 31.3 g/g, and an AAP 0.3 of 30.4 g/g.

Production Example 2

Into a reaction vessel, 244.9 g of acrylic acid, 0.71 g (0.040 mol% with respect to the carboxyl group-containing unsaturated monomer) of polyethylene glycol diacrylate (molecular weight: 523) as an internal crosslinking agent, 1.83 g of a 1.0 mass% aqueous diethylenetriamine pentaacetic acid·trisodium (DTPA·3Na) solution, 103.7 g of a 48.5 mass% aqueous sodium hydroxide solution, and 389.0 g of deionized water were put and mixed to prepare an aqueous monomer solution (b').

Then, the aqueous monomer solution (b') was cooled with stirring. When the liquid temperature reached 40.0°C, 100.9 g of a 48.5 mass% aqueous sodium hydroxide solution adjusted to 40°C was added and mixed to prepare an aqueous monomer solution (b). At this time, the temperature of the aqueous monomer solution (b) was raised to 78.0°C because of the second stage neutralization heat immediately after the preparation. Immediately after the 48.5 mass% aqueous sodium hydroxide solution was started to be mixed, precipitates were observed; however, the precipitates were gradually dissolved to form a clear homogeneous solution.

Then, to the aqueous monomer solution (b) in a stirred state, 12.1 g of a 4.0 mass% aqueous sodium persulfate solution was added, and immediately thereafter, the mixture was poured into a stainless tray-shaped container in an open-to-atmosphere system. The time from the start of the second stage neutralization to the pouring of the aqueous monomer solution (b) into the tray-shaped container was set to 55 seconds, a hot plate was used as the tray-shaped container, and heating was performed until the surface temperature reached 40°C. The polymerization reaction was started 60 seconds after the aqueous monomer solution (b) was poured into the tray-shaped container. In the polymerization reaction, the polymerization solution was expanded and foamed in all directions while generating water vapor, and then was shrunk to a size slightly larger than that of the tray-shaped container. A hydrogel (2) was taken out 3 minutes after the start of the polymerization reaction. It should be noted that these series of operations were performed in an open-to-atmosphere system.

The hydrogel (2) produced in the polymerization reaction was cut into a strip shape and subjected to gel grinding with a meat chopper having a die diameter of 7.5 mm, and then the hydrogel (2) was spread on a 50-mesh wire mesh and dried with hot air at 190°C for 60 minutes.

Subsequently, the obtained product was pulverized using a vibration mill, and further classified with JIS standard sieves having mesh sizes of 850 μm and 150 μm, thereby preparing a water-absorbent resin precursor (2) in an irregularly crushed shape.

A surface crosslinking agent solution containing 0.030 parts by mass of ethylene glycol diglycidyl ether, 1.35 parts by mass of propylene glycol, and 3.15 parts by mass of deionized water were uniformly mixed per 100 parts by mass of the resulting water-absorbent resin precursor (2), and a heat treatment was performed at 100°C for 45 minutes.

Thereafter, the mixture was cooled and passed through a JIS standard sieve with an opening of 710 μm, thereby preparing a water-absorbent resin (B). The resulting water-absorbent resin (B) had a CRC of 35.9 g/g, and an AAP 0.3 of 28.9 g/g.

Reference Example 1

To 10.0 parts by mass of the water-absorbent resin (B) obtained in Production Example 2, 73.3 parts by mass of deionized water was added, and the mixture was left to stand at room temperature for 12 hours or more to prepare a gel-like simulated spent water-absorbent resin (S1).

In a reaction vessel, the entire amount of the simulated spent water-absorbent resin (S1), 14.9 parts by mass of a 15 mass% aqueous sodium carbonate solution (pH of the mixture was adjusted to 8.0 or more and 8.5 or less) as a pH adjuster, and 0.67 parts by mass of a 30 mass% aqueous hydrogen peroxide solution as a decomposing agent were added, and the mixture was mixed by stirring for 100 rotations over 2 minutes with a spatula to obtain a mixture.

Subsequently, the reaction vessel containing the mixture was placed in a thermostatic bath at 80°C to start a decomposition reaction. It was confirmed that all the gel-like product was solubilized, and an aqueous solubilized polymer (S1) solution was obtained 60 minutes after the start of the reaction.

Then, 8.1 parts by mass of 15 mass% aqueous sodium carbonate solution was added to the aqueous solubilized polymer (S1) solution, and the mixture was stirred at 80°C for 30 minutes and then cooled to room temperature. This operation removed the hydrogen peroxide remaining in the aqueous solubilized polymer (S1) solution.

The resulting aqueous solubilized polymer (S1) solution had a solid content concentration of 9.24 mass%. The mass-average molecular weight of the solubilized polymer (S1) was 248000.

Comparative Example 1

To 10.0 parts by mass of the water-absorbent resin (A) obtained in Production Example 1, 73.3 parts by mass of deionized water was added, and the mixture was left to stand at room temperature for 12 hours or more to prepare a gel-like simulated spent water-absorbent resin (C1).

In a reaction vessel, the entire amount of the simulated spent water-absorbent resin (C1), 14.9 parts by mass of a 15 mass% aqueous sodium carbonate solution (pH of the mixture was adjusted to 8.0 or more and 8.5 or less) as a pH adjuster, and 0.67 parts by mass of a 30 mass% aqueous hydrogen peroxide solution as a decomposing agent were added, and the mixture was mixed by stirring for 100 rotations over 2 minutes with a spatula to obtain a mixture.

Subsequently, the reaction vessel containing the mixture was placed in a thermostatic bath at 80°C to start a decomposition reaction. It was confirmed that all the gel-like product was solubilized, and an aqueous solubilized polymer (C1) solution was obtained 120 minutes after the start of the reaction.

Then, 8.1 parts by mass of 15 mass% aqueous sodium carbonate solution was added to the aqueous solubilized polymer (C1) solution, and the mixture was stirred at 80°C for 30 minutes and then cooled to room temperature. This operation removed the hydrogen peroxide remaining in the aqueous solubilized polymer (C1) solution.

The resulting aqueous solubilized polymer (C1) solution had a solid content concentration of 9.02 mass%. The mass-average molecular weight of the solubilized polymer (C1) was 304000.

Example 1

To 10.0 parts by mass of the water-absorbent resin (A) obtained in Production Example 1 and 10.0 parts by mass of the water-absorbent resin (B) obtained in Production Example 2, 146.7 parts by mass of deionized water was added, and the mixture was left to stand at room temperature for 12 hours or more to prepare a gel-like simulated spent water-absorbent resin (1).

In a reaction vessel, the entire amount of the simulated spent water-absorbent resin (1), 29.9 parts by mass of a 15 mass% aqueous sodium carbonate solution (pH of the mixture was adjusted to 8.0 or more and 8.5 or less) as a pH adjuster, and 1.33 parts by mass of a 30 mass% aqueous hydrogen peroxide solution as a decomposing agent were added, and the mixture was mixed by stirring for 100 rotations over 2 minutes with a spatula to obtain a mixture.

Subsequently, the reaction vessel containing the mixture was placed in a thermostatic bath at 80°C to start a decomposition reaction. It was confirmed that all the gel-like product was solubilized, and an aqueous solubilized polymer (1) solution was obtained 80 minutes after the start of the reaction.

Then, 16.1 parts by mass of 15 mass% aqueous sodium carbonate solution was added to the aqueous solubilized polymer (1) solution, and the mixture was stirred at 80°C for 30 minutes and then cooled to room temperature. This operation removed the hydrogen peroxide remaining in the aqueous solubilized polymer (1) solution.

The resulting aqueous solubilized polymer (1) solution had a solid content concentration of 9.24 mass%. The mass-average molecular weight of the solubilized polymer (1) was 299000.

Example 2

To 10.0 parts by mass of the water-absorbent resin (A) obtained in Production Example 1 and 4.30 parts by mass of the water-absorbent resin (B) obtained in Production Example 2, 104.9 parts by mass of deionized water was added, and the mixture was left to stand at room temperature for 12 hours or more to prepare a gel-like simulated spent water-absorbent resin (2).

In a reaction vessel, the entire amount of the simulated spent water-absorbent resin (2), 21.4 parts by mass of a 15 mass% aqueous sodium carbonate solution (pH of the mixture was adjusted to 8.0 or more and 8.5 or less) as a pH adjuster, and 0.95 parts by mass of a 30 mass% aqueous hydrogen peroxide solution as a decomposing agent were added, and the mixture was mixed by stirring for 100 rotations over 2 minutes with a spatula to obtain a mixture.

Subsequently, the reaction vessel containing the mixture was placed in a thermostatic bath at 80°C to start a decomposition reaction. It was confirmed that all the gel-like product was solubilized, and an aqueous solubilized polymer (2) solution was obtained 80 minutes after the start of the reaction.

Then, 11.5 parts by mass of 15 mass% aqueous sodium carbonate solution was added to the aqueous solubilized polymer (2) solution, and the mixture was stirred at 80°C for 30 minutes and then cooled to room temperature. This operation removed the hydrogen peroxide remaining in the aqueous solubilized polymer (2) solution.

The resulting aqueous solubilized polymer (2) solution had a solid content concentration of 9.11 mass%. The mass-average molecular weight of the solubilized polymer (2) was 321000.

Example 3

To 10.0 parts by mass of the water-absorbent resin (A) obtained in Production Example 1 and 1.80 parts by mass of the water-absorbent resin (B) obtained in Production Example 2, 86.5 parts by mass of deionized water was added, and the mixture was left to stand at room temperature for 12 hours or more to prepare a gel-like simulated spent water-absorbent resin (3).

In a reaction vessel, the entire amount of the simulated spent water-absorbent resin (3), 17.6 parts by mass of a 15 mass% aqueous sodium carbonate solution (pH of the mixture was adjusted to 8.0 or more and 8.5 or less) as a pH adjuster, and 0.79 parts by mass of a 30 mass% aqueous hydrogen peroxide solution as a decomposing agent were added, and the mixture was mixed by stirring for 100 rotations over 2 minutes with a spatula to obtain a mixture.

Subsequently, the reaction vessel containing the mixture was placed in a thermostatic bath at 80°C to start a decomposition reaction. It was confirmed that all the gel-like product was solubilized, and an aqueous solubilized polymer (3) solution was obtained 100 minutes after the start of the reaction.

Then, 9.5 parts by mass of 15 mass% aqueous sodium carbonate solution was added to the aqueous solubilized polymer (3) solution, and the mixture was stirred at 80°C for 30 minutes and then cooled to room temperature. This operation removed the hydrogen peroxide remaining in the aqueous solubilized polymer (3) solution.

The resulting aqueous solubilized polymer (3) solution had a solid content concentration of 9.24 mass%. The mass-average molecular weight of the solubilized polymer (3) was 286000.

Example 4

To 10.0 parts by mass of the water-absorbent resin (A) obtained in Production Example 1, 73.3 parts by mass of deionized water was added, and the mixture was left to stand at room temperature for 12 hours or more to prepare a gel-like simulated spent water-absorbent resin (4-1). To 10.0 parts by mass of the water-absorbent resin (B) obtained in Production Example 2, 73.3 parts by mass of deionized water was added, and the mixture was left to stand at room temperature for 12 hours or more to prepare a gel-like simulated spent water-absorbent resin (4-2).

1500 g of the simulated spent water-absorbent resin (4-1), 1500 g of the simulated spent water-absorbent resin (4-2), 540 g of a 15 mass% of aqueous sodium carbonate solutions as a pH adjuster, and 24.0 g of a 30 mass% of aqueous hydrogen peroxide solution as a decomposing agent were continuously mixed over 20 minutes using a continuous high-speed stirring mixer (a small super Turbulizer available from Hosokawa Micron Corporation ("Turbulizer" is a trade name of Hosokawa Micron Corporation)) to obtain a humidified product (4).

Subsequently, the resulting humidified product (4) was charged into a reaction vessel equipped with a paddle stirring blade, immersed in a hot water bath at 80°C, and stirred with the stirring blade at 60 rpm to start a decomposition reaction. It was visually confirmed that the entire simulated spent water-absorbent resin was solubilized, and an aqueous solubilized polymer (4) solution was obtained 50 minutes after the start of the reaction.

Then, 292 g of a 15 mass% aqueous sodium carbonate solution was added to the aqueous solubilized polymer (4) solution, and the mixture was stirred at 80°C for 2 hours and then cooled to room temperature. This operation removed the hydrogen peroxide remaining in the aqueous solubilized polymer (4) solution down to 23 ppm.

The resulting aqueous solubilized polymer (4) solution was taken out from the reaction vessel, and then the inside of the reaction vessel was checked, and no undissolved residue was observed. The aqueous solubilized polymer (4) solution had a solid content concentration of 9.55 mass%. The mass-average molecular weight of the solubilized polymer (4) was 278000.

Example 5

To 10.0 parts by mass of the water-absorbent resin (A) obtained in Production Example 1, 73.3 parts by mass of deionized water was added, and the mixture was left to stand at room temperature for 12 hours or more to prepare a gel-like simulated spent water-absorbent resin (5-1). To 1.80 parts by mass of the water-absorbent resin (B) obtained in Production Example 2, 13.2 parts by mass of deionized water was added, and the mixture was left to stand at room temperature for 12 hours or more to prepare a gel-like simulated spent water-absorbent resin (5-2).

1500 g of the simulated spent water-absorbent resin (5-1), 279 g of the simulated spent water-absorbent resin (5-2), 320 g of a 15 mass% aqueous sodium carbonate solutions as a pH adjuster, and 14.2 g of a 30 mass% aqueous hydrogen peroxide solution as a decomposing agent were continuously mixed over 20 minutes using a continuous high-speed stirring mixer (a small super Turbulizer available from Hosokawa Micron Corporation) to obtain a humidified product (5).

Subsequently, the resulting humidified product (5) was charged into a reaction vessel equipped with a paddle stirring blade, immersed in a hot water bath at 80°C, and stirred with the stirring blade at 60 rpm to start a decomposition reaction. It was visually confirmed that the entire simulated spent water-absorbent resin was solubilized, and an aqueous solubilized polymer (5) solution was obtained 70 minutes after the start of the reaction.

Then, 173 g of a 15 mass% aqueous sodium carbonate solution was added to the aqueous solubilized polymer (5) solution, and the mixture was stirred at 80°C for 2 hours and then cooled to room temperature. This operation removed the hydrogen peroxide remaining in the aqueous solubilized polymer (5) solution down to 20 ppm.

The resulting aqueous solubilized polymer (5) solution was taken out from the reaction vessel, and then the inside of the reaction vessel was checked, and no undissolved residue was observed. The aqueous solubilized polymer (5) solution had a solid content concentration of 9.52 mass%. The mass-average molecular weight of the solubilized polymer (5) was 311000.

The results of Reference Example 1, Comparative Example 1, and Examples 1 to 5 are shown in Table 1.

[Table 1]

| | Method for charging raw material | Water-absorbent resin blending ratio | | Simulated spent water-absorbent resin | | pH adjuster | Decomposing agent | Decomposition time | Aqueous solubilized polymer solution |
|---|---|---|---|---|---|---|---|---|---|
| | | Water-absorbent resin (A) | Water-absorbent resin (B) | Product name | Amount of pigment charged | Aqueous Na carbonate solution | Aqueous $H_2O_2$ solution | (Minutes) | Solid content concentration |
| | | (Parts by mass) | (Parts by mass) | | (Parts by mass) | (Parts by mass) | (Parts by mass) | | (mass%) |
| Reference Example 1 | Water-absorbent resin (A), water-absorbent resin (B), pH adjuster, and decomposing agent all added at once | 0 | 10 | S1 | 83.3 | 14.9 | 0.67 | 60 | 9.24 |
| Comparative Example 1 | | 10 | 0 | C1 | 83.3 | 14.9 | 0.67 | 120 | 9.02 |
| Example 1 | | 10 | 10 | 1 | 166.7 | 29.9 | 1.33 | 80 | 9.24 |
| Example 2 | | 10 | 4.3 | 2 | 119.2 | 21.4 | 0.95 | 80 | 9.11 |
| Example 3 | | 10 | 1.8 | 3 | 98.3 | 17.6 | 0.79 | 100 | 9.24 |
| Example 4 | Water-absorbent resin (A), water-absorbent resin (B), pH adjuster, and decomposing agent continuously added and mixed over 20 minutes | 10 | 10 | 4-1 4-2 | 83.3 83.3 | 30 | 1.33 | 50 | 9.55 |
| Example 5 | | 10 | 1.8 | 5-1 5-2 | 83.3 150 | 17.7 | 0.79 | 70 | 9.52 |

Summary

In Comparative Example 1 in which the water-absorbent resin (A) having poor decomposability (long decomposition time) was decomposed alone, it took 120 minutes to decompose the water-absorbent resin. On the other hand, in Examples 1 to 3 in which the water-absorbent resin (B) having more excellent decomposability (shorter decomposition time) than the water-absorbent resin (A) was used in combination, it was confirmed that the decomposition time was shorter than that in Comparative Example 1.

Since the decomposability of the water-absorbent resin is originally determined by the decomposition conditions such as the amount of the decomposing agent used and the decomposition temperature, the decomposition time in Examples 1 to 3 should be 120 minutes, which is the same as the decomposition time of the water-absorbent resin (A) having a long decomposition time (the time required for 10 parts by mass of the water-absorbent resin (A) to disappear and be completely solubilized), or more due to the presence of the water-absorbent resin (B). Therefore, the shortened decomposition time observed in Examples 1 to 3, on the premise that the amount of decomposing agent based on the total amount of the water-absorbent resin (A) and the water-absorbent resin (B) is the same, can be said to be an unexpected result. Although the reason is unknown, it is considered that the effect is due to some interaction by the combined use of the water-absorbent resin (B), and probably, it is considered that the presence of the decomposed product of the water-absorbent resin (B) functions as a plasticizer at the time of decomposition of the water-absorbent resin (A), thereby suppressing the aggregation of the water-absorbent resin (A) and increasing the surface area thereof, so that the frequency of contact of the decomposing agent with the water-absorbent resin (A) is improved, and the decomposition of the water-absorbent resin (A) is promoted.

On the other hand, in Examples 4 and 5, all the raw materials were continuously mixed using a continuous high-speed stirring mixer when the water-absorbent resin (A), the water-absorbent resin (B), the pH adjuster, and the decomposing agent, which were the raw materials of Examples 1 and 3, were put into the reaction vessel. By the continuous mixing process, the time required for solubilization was shortened from 80 minutes in Example 1 to 50 minutes in Example 4, and from 100 minutes in Example 3 to 70 minutes in Example 5. From these results, it is considered that homogenization of the raw materials by the continuous mixer resulted in improvement of the decomposability.

Example 6

Into a reaction vessel, 220.4 g of acrylic acid, 0.64 g (0.040 mol% with respect to the carboxyl group-containing unsaturated monomer) of polyethylene glycol diacrylate (molecular weight: 523) as an internal crosslinking agent, 324.7 g of the aqueous solubilized polymer solution (1) prepared in Example 1, 1.83 g of a 1.0 mass% aqueous diethylenetriamine pentaacetic acid·trisodium (DTPA·3Na) solution, 93.4 g of a 48.5 mass% aqueous sodium hydroxide solution, and 25.3 g of deionized water were put and mixed to prepare an aqueous monomer solution (c').

Then, the aqueous monomer solution (c') was cooled with stirring. When the liquid temperature reached 40.0°C, 90.8 g of a 48.5 mass% aqueous sodium hydroxide solution adjusted to 40°C was added and mixed to prepare an aqueous monomer solution (c). At this time, the temperature of the aqueous monomer solution (c) was raised to 78.2°C because of the second stage neutralization heat immediately after the preparation. Immediately after the 48.5 mass% aqueous sodium hydroxide solution was started to be mixed, precipitates were observed; however, the precipitates were gradually dissolved to form a clear homogeneous solution.

Then, to the aqueous monomer solution (c) in a stirred state, 10.9 g of a 4.0 mass% aqueous sodium persulfate solution was added, and immediately thereafter, the mixture was poured into a stainless tray-shaped container in an open-to-atmosphere system. The time from the start of the second stage neutralization to the pouring of the aqueous monomer solution (c) into the tray-shaped container was set to 55 seconds, a hot plate was used as the tray-shaped container, and heating was performed until the surface temperature reached 40°C. The polymerization reaction was started 65 seconds after the aqueous monomer solution (c) was poured into the tray-shaped container. In the polymerization reaction, the polymerization solution was expanded and foamed in all directions while generating water vapor, and then was shrunk to a size slightly larger than that of the tray-shaped container. A hydrogel (6) was taken out 3 minutes after the start of the polymerization reaction. It should be noted that these series of operations were performed in an open-to-atmosphere system.

The hydrogel (6) produced in the polymerization reaction was cut into a strip shape and subjected to gel grinding with a meat chopper having a die diameter of 7.5 mm, and then the hydrogel (6) was spread on a 50-mesh wire mesh and dried with hot air at 190°C for 60 minutes.

Subsequently, the obtained product was pulverized using a vibration mill, and further classified with JIS standard sieves having mesh sizes of 850 $\mu$m and 150 $\mu$m, thereby preparing a water-absorbent resin precursor (6) in an irregularly crushed shape.

A surface crosslinking agent solution containing 0.040 parts by mass of ethylene glycol diglycidyl ether, 1.35 parts by mass of propylene glycol, and 3.15 parts by mass of deionized water were uniformly mixed per 100 parts by mass of the resulting water-absorbent resin precursor (6), and a heat treatment was performed at 100°C for 45 minutes.

Thereafter, the mixture was cooled and passed through a JIS standard sieve with an opening of 710 μm, thereby preparing a water-absorbent resin (6). The resulting water-absorbent resin (6) had a CRC of 36.4 g/g, and an AAP 0.3 of 27.6 g/g.

[Table 2]

| | Aqueous solubilized polymer solution | Mass ratio | | Water-absorbent resin | | |
|---|---|---|---|---|---|---|
| | | Monomer [Parts by mass] | Solubilized polymer [Parts by mass] | Product name | CRC [g/g] | AAP 0.3 (g/g) |
| Production Example 2 | None | 100 | 0 | (2) | 35.9 | 28.9 |
| Example 6 | (1) | 90 | 10 | (6) | 36.4 | 27.6 |

This application is based on Japanese Patent Application No. 2023-124764 filed on July 31, 2023, and Japanese Patent Application No. 2023-124937 filed on July 31, 2023, the disclosures of which are incorporated herein by reference in their entirety.

**Claims**

1. A method for producing a solubilized polymer, comprising preparing a water-absorbent resin (A), which is a water-absorbent resin to be decomposed; and contacting the water-absorbent resin (A) with a decomposing agent, wherein:

    (i) the contacting is performed in the presence of a water-absorbent resin (B), which is a water-absorbent resin having higher decomposability than the water-absorbent resin (A); or
    (ii) the contacting is performed in the presence of a decomposed product separately prepared by contacting a water-absorbent resin (B) with a decomposing agent, the water-absorbent resin (B) being a water-absorbent resin having higher decomposability than the water-absorbent resin (A).

2. The method according to claim 1, wherein a mass ratio of the water-absorbent resin (A) to the water-absorbent resin (B) is from 85:15 to 15:85.

3. The method according to claim 1, wherein at least one of the decomposing agents includes an oxidizing agent.

4. The method according to claim 3, wherein the oxidizing agent includes one or more selected from peroxides.

5. The method according to claim 1, wherein a ratio of a decomposition time (minute) of the water-absorbent resin (A) to a decomposition time (minute) of the water-absorbent resin (B) is 1.5 or more.

6. The method according to claim 1, wherein at least one of the steps of contacting is performed using a continuous mixer.

7. The method according to claim 1, wherein a concentration of all the water-absorbent resins in a mixture obtained by the contacting is 5 mass% or more and 60 mass% or less when a mass of the entire mixture is 100 mass%.

8. The method according to claim 1, further comprising, after preparing the water-absorbent resin (A), reducing a particle size of at least one of the water-absorbent resin (A) and the water-absorbent resin (B) in advance, before the contacting.

9. A method for producing a water-absorbent resin, comprising:

    obtaining a solubilized polymer by the method described in any one of claims 1 to 8, and
    using the solubilized polymer as at least a part of a raw material of the water-absorbent resin.

10. The method for producing a water-absorbent resin according to claim 9, wherein a mass of the solubilized polymer to be used is 1 mass% or more and 60 mass% or less with respect to a mass of the whole raw material.

FIG. 1

## INTERNATIONAL SEARCH REPORT

International application No.

**PCT/JP2024/023029**

| A. | CLASSIFICATION OF SUBJECT MATTER |
| --- | --- |

*C08J 11/16*(2006.01)i; *C08J 3/12*(2006.01)i
FI: C08J11/16 ZAB; C08J3/12 A CEY

According to International Patent Classification (IPC) or to both national classification and IPC

| B. | FIELDS SEARCHED |
| --- | --- |

Minimum documentation searched (classification system followed by classification symbols)

C08J11/16; C08J3/12

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | WO 2021/162071 A1 (NIPPON SHOKUBAI CO., LTD.) 19 August 2021 (2021-08-19) entire text, all drawings | 1-10 |
| A | WO 2020/141589 A1 (UNI-CHARM CO., LTD.) 09 July 2020 (2020-07-09) entire text, all drawings | 1-10 |
| A | JP 2019-131789 A (NIPPON SHOKUBAI CO., LTD.) 08 August 2019 (2019-08-08) entire text, all drawings | 1-10 |

☐ Further documents are listed in the continuation of Box C.      ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **18 July 2024** | **30 July 2024** |

| Name and mailing address of the ISA/JP | Authorized officer |
| --- | --- |
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

## INTERNATIONAL SEARCH REPORT
### Information on patent family members

International application No.

**PCT/JP2024/023029**

| Patent document cited in search report | Publication date (day/month/year) | Patent family member(s) | Publication date (day/month/year) |
|---|---|---|---|
| WO 2021/162071 A1 | 19 August 2021 | (Family: none) | |
| WO 2020/141589 A1 | 09 July 2020 | EP 3885488 A1 entire text, all drawings CN 113227490 A entire text, all drawings | |
| JP 2019-131789 A | 08 August 2019 | (Family: none) | |

# EP 4 755 964 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4317784 A
- JP 2001316519 A
- JP 2007191708 A
- JP 2004155963 A
- WO 2013073682 A
- JP 3227301 A
- JP 11005808 A
- WO 2004083284 A
- WO 2009025235 A
- WO 2013018571 A
- JP 10101735 A
- JP 1103606 A
- JP 62054751 A
- JP 2002527547 A
- JP 3174414 A
- JP 4317785 A
- JP 5247221 A
- JP 2019131789 A
- WO 2021042113 A
- JP 2017100133 A
- JP 11172039 A
- JP 2020049398 A
- WO 2009123197 A
- US 20080194863 A
- US 20050215734 A
- US 7265190 B
- US 4893999 A
- US 6241928 B
- US 2005215734 A
- US 6987151 B
- US 6710141 B
- WO 2011126079 A
- WO 2006100300 A
- WO 2011025012 A
- WO 2011025013 A
- WO 2011111657 A
- US 7183456 B
- JP 2023124764 A
- JP 2023124937 A